(19) Europäisches Patentamt
European Patent Office
Office européen des brevets

(11) EP 4 451 374 A1

(12) **EUROPEAN PATENT APPLICATION**
published in accordance with Art. 153(4) EPC

(43) Date of publication:
**23.10.2024 Bulletin 2024/43**

(21) Application number: **22907735.9**

(22) Date of filing: **17.11.2022**

(51) International Patent Classification (IPC):
**H01M 4/36** (2006.01)   **H01M 4/38** (2006.01)
**H01M 4/48** (2010.01)   **H01M 4/62** (2006.01)
**H01M 10/052** (2010.01)   **H01M 4/02** (2006.01)

(52) Cooperative Patent Classification (CPC):
**H01M 4/02; H01M 4/36; H01M 4/38; H01M 4/48;**
**H01M 4/62; H01M 10/052;** Y02E 60/10

(86) International application number:
**PCT/KR2022/018209**

(87) International publication number:
**WO 2023/113265 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2021   KR 20210178294**

(71) Applicant: POSCO Silicon Solution Co., Ltd
**Sejong-si 30011 (KR)**

(72) Inventors:
- LEE, Jaewoo
  **Sejong 30152 (KR)**
- CHO, Moonkyu
  **Pohang-si, Gyeongsangbuk-do 37948 (KR)**
- CHOI, Sunho
  **Daejeon 34396 (KR)**
- CHEON, Junghoon
  **Sejong 30153 (KR)**

(74) Representative: **Maiwald GmbH**
**Elisenhof**
**Elisenstraße 3**
**80335 München (DE)**

(54) **NEGATIVE ELECTRODE MATERIAL FOR SECONDARY BATTERY**

(57)   The present invention relates to a negative electrode material for a secondary battery. The negative electrode material for a secondary battery, according to the present invention, comprises: a matrix containing silicon oxide, a composite oxide of silicon with at least one doping element selected from the group consisting of alkali metals, alkaline earth metals and post-transition metals, or a mixture thereof; and silicon nanoparticles, wherein, during a charge-discharge test using a half-cell in which a counter electrode is a metal lithium foil, according to the following charge/discharge cycle conditions, the following formula 1 is satisfied, and, in an X-ray diffraction pattern using CuKα rays, the ratio (A1/A2) of a first peak area (A1) where the diffraction angle 2θ is located in the range of 10° to 27.4° and a second peak area (A2) where the diffraction angle 2θ is located in the range of $28\pm0.5°$ satisfies 0.8 to 6. Charge/discharge cycle conditions: constant current/constant voltage (CC/CV), cut-off voltage 0.005 V to 1.0 V, 0.5 charge/discharge rate (C-rate)

$$\text{(formula 1)} \quad 95\ \% \leq C50/C1*100,$$

in which in formula 1, C1 is the discharge capacity (mAh/g) at a first charge/discharge cycle, and C50 is the discharge capacity at a 50th charge/discharge cycle.

FIG. 2

**Description**

Technical Field

The present disclosure relates to a negative electrode material for a secondary battery, and more particularly, to a negative electrode material for a secondary battery having improved capacity, initial efficiency, and cycle characteristics.

Background Art

In general, in various industries such as electronic products, electric/hybrid vehicles, and aerospace/drones, demand for secondary batteries, which not only have high energy density and high power density but also can be used for a long period of time, that is, have a long lifespan, is continuously increasing.

In general, a secondary battery capable of charging and discharging includes a positive electrode, a negative electrode, an electrolyte, and a separator. Among these, the commercially used typical negative electrode material included in the negative electrode is graphite, but the theoretical maximum capacity of the graphite is only 372 mAh/g.

Accordingly, in order to implement a secondary battery with high energy density, research is continuously being conducted to use chalcogen-based materials such as sulfur (maximum capacity 1,675 mAh/g), silicon-based materials such as silicon (maximum capacity 4,200 mAh/g) or silicon oxide (maximum capacity 1,500 mAh/g), transition metal oxides, etc., as the negative electrode material for a secondary battery, and among various materials, the silicon-based negative electrode materials are receiving the most attention.

However, when the particulate silicon is used as the negative electrode material, as charge/discharge cycling is repeated, battery characteristics rapidly deteriorate due to insulation, particle detachment, and increase in contact resistance due to a large change in volume of silicon, so there is a problem in that a function as a battery is already lost in less than 100 cycles, and in the case of the silicon oxide, there is a problem in that lithium is lost due to irreversible products such as lithium silicate or lithium oxide and the initial charge/discharge efficiency is rapidly reduced.

To solve these problems with the silicon-based negative electrode materials, a technology of making silicon nano-sized in a wire-like form and making silicon a composite with carbon materials, a technology of forming a composite oxide phase by doping silicon oxide with different metals or pre-lithiating silicon oxide, etc., have been proposed. However, there are still problems with commercialization due to poor initial charge/discharge efficiency, cycle characteristics, high rate characteristics, etc.

[Related Art Document]

[Patent Document]

Korean Patent Laid-Open Publication No. 10-2020-0065514

Korean Patent Laid-Open Publication No. 10-2015-0045336

Summary of Invention

Technical Problem

An aspect of the present disclosure is to provide a silicon-based negative electrode material for a secondary battery with high battery capacity, improved initial reversible efficiency, and stable cycle characteristics.

Solution to Problem

According to an aspect of the present disclosure, a negative electrode material for a secondary battery includes: a matrix containing silicon oxide, a composite oxide of silicon with at least one doping element selected from the group consisting of alkali metals, alkaline earth metals and post-transition metals, or a mixture thereof; and silicon nanoparticles dispersed and embedded in the matrix, in which, during a charge-discharge test using a half-cell in which a counter electrode is a metal lithium foil, according to the following charge/discharge cycle conditions, the following Formula 1 is satisfied, and, in an X-ray diffraction pattern using CuK$\alpha$ rays, the ratio ($A_1/A_2$) of a first peak area ($A_1$) in which the diffraction angle $2\Theta$ is located in the range of 10° to 27.4° and a second peak area ($A_2$) in which the diffraction angle $2\theta$

is located in the range of 28±0.5° satisfies 0.8 to 6.

Charge/discharge cycle conditions: constant current/constant voltage (CC/CV), cut-off voltage 0.005 V to 1.0 V, 0.5 charge/discharge rate (C-rate).

$$\text{(Formula 1)}$$

$$95\ \%\ \leq\ C50/C1*100$$

In Formula 1, C1 is the discharge capacity (mAh/g) at a first charge/discharge cycle, and C50 is the discharge capacity at a 50th charge/discharge cycle.

In an X-ray diffraction pattern using CuK$\alpha$ rays, the ratio ($L_1/L_2$) of a full width at half maximum (FWHM($L_1$)) of the first peak in which the diffraction angle $2\Theta$ is located in the range of 10° to 27.4° and a full width at half maximum (FWHM ($L_2$)) of the second peak in which the diffraction angle $2\Theta$ is located in the range of 28±0.5° may be 6 to 15.

An intensity ratio ($I_1/I_2$) between maximum intensity ($I_1$) of the first peak and maximum intensity ($I_2$) of the second peak may be 0.05 to 1.25.

The first peak may be derived from amorphous silicon oxide, and the second peak may be derived from crystalline silicon.

The discharge capacity C50 at a 50th charge/discharge cycle may be 1150mAh/g or more.

A full width at half maximum (FWHM) of a Raman peak of nanoparticulate silicon contained in the negative electrode material may be larger than a full width at half maximum (FWHM) of a Raman peak of bulk single crystal silicon.

The full width at half maximum (FWHM) of the Raman peak of the nanoparticulate silicon contained in the negative electrode material may be 4 to 20 cm$^{-1}$.

The following Formula 2 may be satisfied based on a Raman signal of the silicon.

$$\text{(Formula 2)}$$

$$1<\ WN(Si)/WN(ref)$$

(In Formula 2, WN(ref) denotes a central wave number of the Raman peak of the bulk single crystal silicon, and WN(Si) denotes a central wave number of the Raman peak of the nanoparticulate silicon contained in the negative electrode material.)

During two-dimensional mapping analysis based on the Raman signal of the silicon, a difference between maximum and minimum values of a shift defined by the following Formula 3 may be 5 cm$^{-1}$ or less under the following mapping conditions. Mapping conditions: excitation laser wavelength = 532 nm, laser power = 0.1 mW, detector exposure time (exposure time per unit analysis area) 1 sec, focal length = 30 mm, grating = 1800 grooves/mm, pixel resolution = 1 cm$^{-1}$ mapping size = 14$\mu$m $\times$ 14$\mu$m

$$\text{(Formula 3)}$$

$$Deviation\ =\ WN^i(Si)-WN(ref)$$

(In Formula 3, WN(ref) is the same as a regulation in Formula 2, and WN$^i$(Si) is the central wave number of the Raman peak of the nanoparticulate silicon contained in the negative electrode material in one pixel which is a unit analysis area during mapping analysis.)

During the shift analysis based on the Raman signal of the silicon at 20 different random positions in a specimen of 20 mm $\times$ 20 mm, the difference between the maximum and minimum values of the deviation defined by the following Formula may be 5 cm$^{-1}$ or less. Mapping conditions: excitation laser wavelength = 532 nm, laser power = 0.1 mW, detector exposure time (exposure time per unit analysis area) 1 sec, focal length = 30 mm, grating = 1800 grooves/mm, pixel resolution = 1 cm$^{-1}$.

$$\text{(Formula 3)}$$

$$Deviation\ =\ WN^i(Si)-WN(ref)$$

(In Formula 3, WN(ref) is the same as a regulation in Formula 2, and $WN^i(Si)$ is the central wave number of the Raman peak of the nanoparticulate silicon contained in the negative electrode material in one pixel which is a unit analysis area during mapping analysis.)

During the stress analysis of the silicon nanoparticle at 20 different random positions in a 20 mm $\times$ 20 mm specimen, a compressive stress may be 80% or more.

The negative electrode material may contain a plurality of negative electrode material particles and have inter-particle composition uniformity according to the following Formula 4.

$$(Formula\ 4)$$

$$1.3 \leq UF(D)$$

(In Formula 4, UF(D) is a value obtained by dividing an average doping element composition between negative electrode material particles divided by a standard deviation of a doping element composition, based on weight percent composition.)

An average diameter of the silicon nanoparticles may be 2 to 30 nm.

An interface between the silicon nanoparticles and the matrix may be a coherent interface.

The doping element may be one or more selected from the group consisting of lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi).

The negative electrode material may be a particle phase having an average diameter of an order of $10^0$ um to $10^1$ um. The negative electrode material may further include a coating layer containing carbon.

According to another aspect of the present disclosure, there is provided a secondary battery comprising a negative electrode material for a secondary battery.

Advantageous Effects of Invention

According to an aspect of the present disclosure, a negative electrode material for a secondary battery according to the present disclosure includes: a matrix containing silicon oxide, a composite oxide of silicon with at least one doping element selected from the group consisting of alkali metals, alkaline earth metals and post-transition metals, or a mixture thereof; and silicon nanoparticles dispersed and embedded in the matrix, in which, during a charge-discharge test using a half-cell in which a counter electrode is a metal lithium foil, according to specific charge/discharge cycle conditions, a Formula defined as 95 % $\leq$ C50/C1*100 is satisfied. As a result, the negative electrode material for a secondary battery has an advantage of having the improved mechanical and electrochemical properties according to crystallographic characteristics based on X-ray diffraction patterns, having the high discharge capacity, and having the capacity retention rate of a level capable of practical commercialization of the secondary battery equipped with a silicon-based negative electrode material.

Brief Description of Drawings

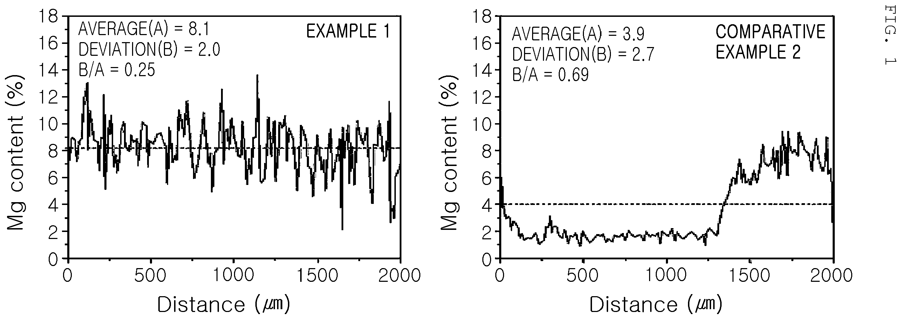

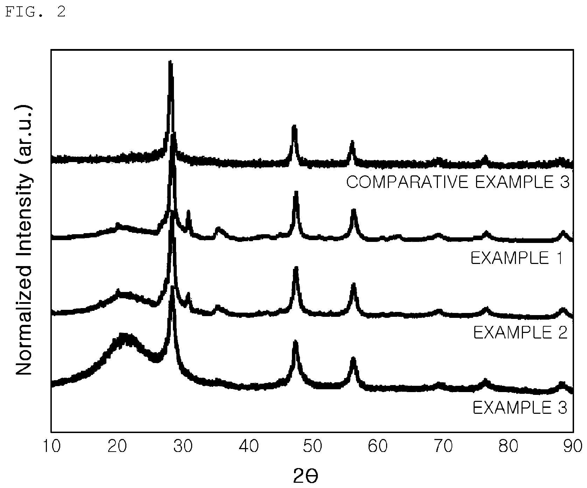

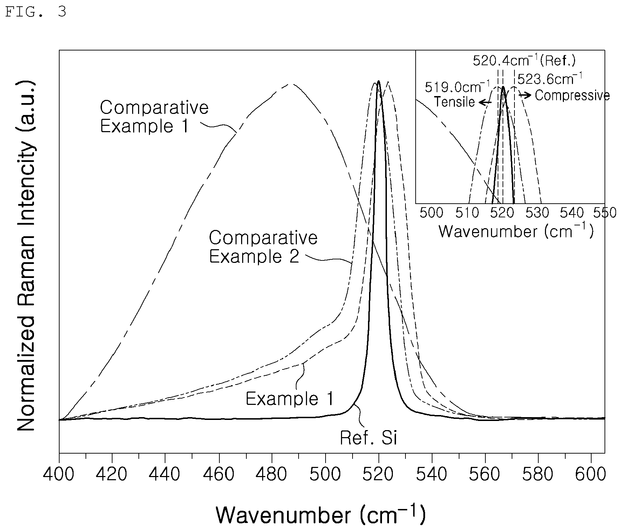

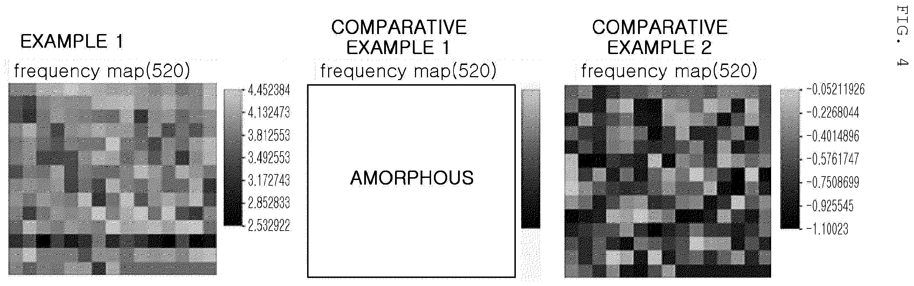

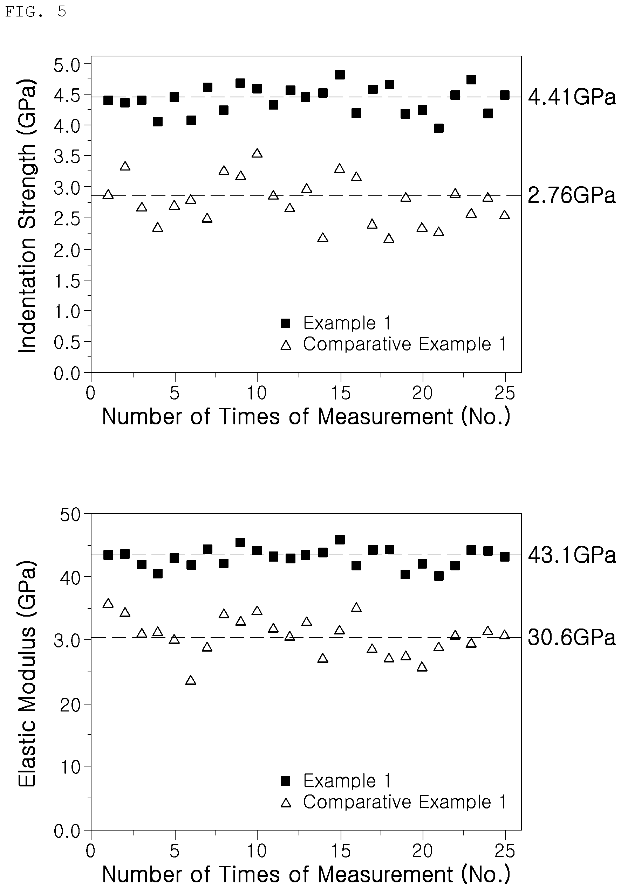

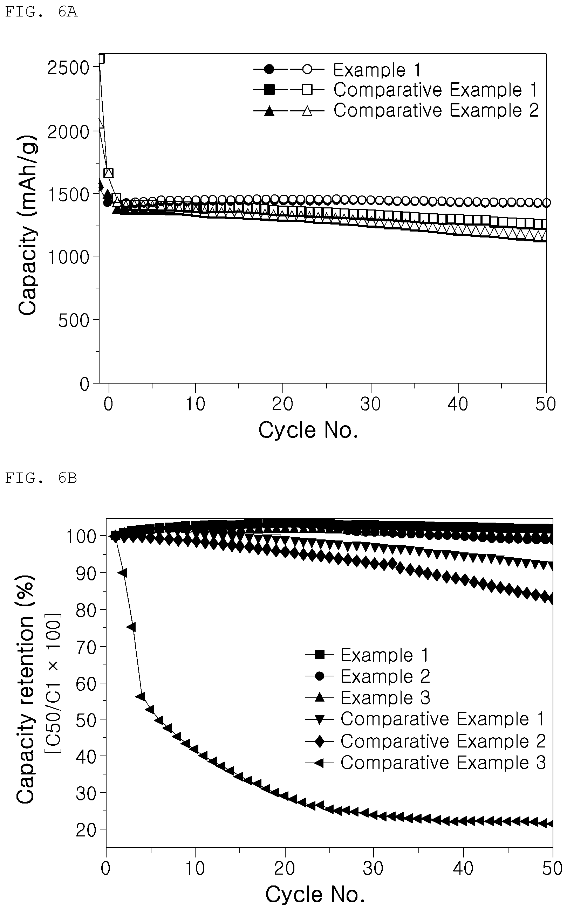

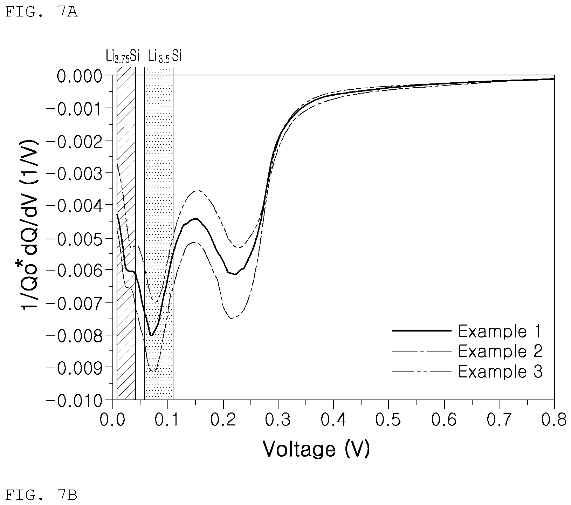

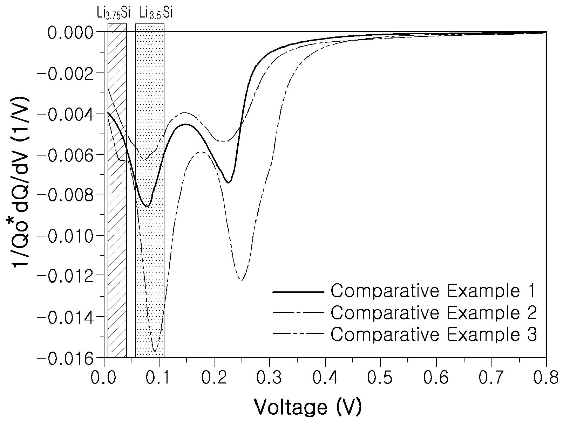

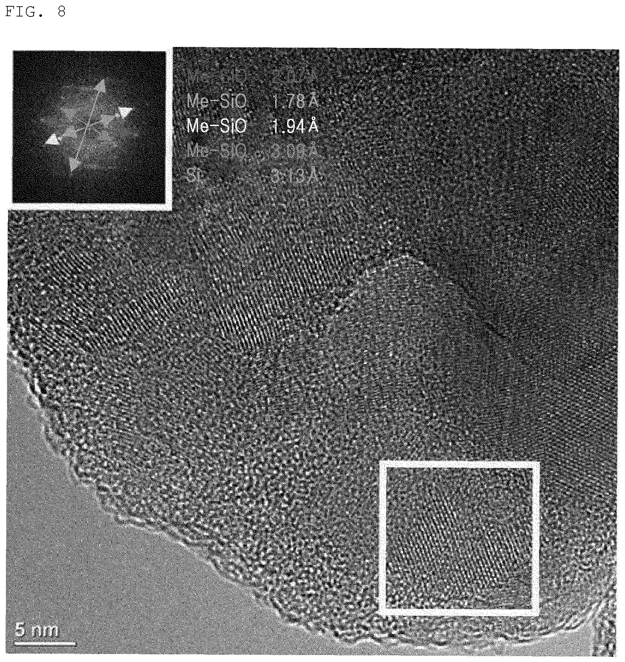

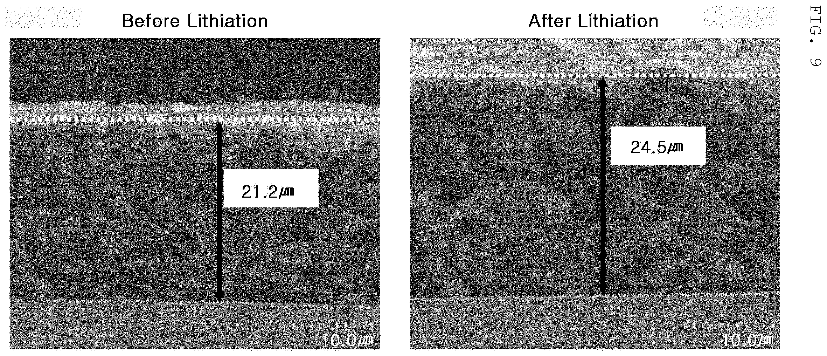

FIG. 1 is a diagram illustrating an energy dispersive X-ray spectroscopy (EDS) line profile measured through EDS of magnesium (Mg) in a cross section of a negative electrode material prepared according to an embodiment of the present disclosure. FIG. 2 is a diagram illustrating an X-ray diffraction (XRD) pattern of the negative electrode material prepared according to the embodiment of the present disclosure. FIG. 3 is a diagram illustrating measurement of Raman spectrum of the negative electrode material prepared according to the embodiment of the present disclosure. FIG. 4 is a diagram illustrating a two-dimensional mapping result based on a Raman signal of silicon of the negative electrode material prepared according to the embodiment of the present disclosure. FIG. 5 is a diagram illustrating the results of measuring the intensity and elastic modulus of the negative electrode material prepared according to the embodiment of the present disclosure. FIGS. 6(a) and 6(b) each are diagrams illustrating charge/discharge capacity and a capacity retention rate according to a charge/discharge cycle of a half-cell equipped with a negative electrode containing the negative electrode material prepared according to the embodiment of the present disclosure. FIGS. 7(a) and 7(b) each are dQ/dV graphs of a half-cell equipped with a negative electrode containing negative electrode materials prepared according to Examples 1 to 3 and Comparative Examples 1 to 3, respectively. FIG. 8 is a high-magnification transmission electron microscope photograph of the negative electrode material prepared according to one embodiment. FIG. 9 is a scanning electron microscope of a cross-section and thickness of a pre-lithiation negative electrode and a cross-section and thickness of a post-lithiation negative electrode in the negative electrode containing the negative electrode material prepared according to the embodiment of the present disclosure.

Best Mode for Invention

Hereinafter, a negative electrode material for a secondary battery of the present disclosure will be described in detail with reference to the accompanying drawings. The drawings to be provided below are provided by way of example so that the spirit of the present disclosure can be sufficiently transferred to those skilled in the art. Therefore, the present disclosure is not limited to the accompanying drawings provided below, but may be modified in many different forms. In addition, the accompanying drawings suggested below will be exaggerated in order to clear the spirit and scope of the present disclosure. Technical terms and scientific terms used in the present specification have the general meaning understood by those skilled in the art to which the present disclosure pertains unless otherwise defined, and a description for the known function and configuration unnecessarily obscuring the gist of the present disclosure will be omitted in the following description and the accompanying drawings.

Also, the singular forms used in the specification and appended claims are intended to include the plural forms as well, unless the context specifically dictates otherwise.

In this specification and appended claims, terms such as first, second, etc., are used for the purpose of distinguishing one component from another component, not in a limiting sense.

In this specification and appended claims, the terms "include" or "have" means that a feature or element described in the specification is present, and unless specifically limited, it does not preclude in advance the possibility that one or more other features or components may be added.

In this specification and appended claims, when a part of a film (layer), a region, a component, etc., is on or above another part, this includes not only the case where the part is in contact with and directly on another part, but also the case where another film (layer), other regions, other components, etc., are also interposed therebetween.

The present applicant discovered that, in a silicon-based negative electrode material which is a composite of silicon and silicon-based oxide, the mechanical and electrochemical properties of the negative electrode material were significantly affected by the residual stress of the silicon contained in the negative electrode material. As a result of in-depth research based on the discovery, the present applicant discovered that when silicon is dispersed in the nanoparticle phase in a silicon-based oxide-based matrix and has the residual compressive stress, the mechanical and electrochemical properties of the negative electrode material are significantly improved, and has reached the completion of the present disclosure. Accordingly, the negative electrode material according to the present disclosure based on the above-described discovery exhibits the mechanical and electrochemical properties that cannot be obtained from the conventional silicon-based negative electrode materials by combining the silicon dispersed in the nanoparticle phase and having residual compressive stress and the matrix. Accordingly, the present disclosure includes various aspects based on the physical properties of the silicon-based negative electrode material according to the present disclosure. In the present disclosure, the matrix may refer to a solid medium in which nanoparticulate silicon is dispersed, and may refer to a material that forms a continuum compared to silicon nanoparticles dispersed in the negative electrode material. In the present disclosure, the matrix may refer to material(s) excluding metallic silicon (Si) from the negative electrode material.

In the present disclosure, nanoparticles may refer to particles of the order of $10^0$ nanometers to $10^2$ nanometers, which are a size (diameter) generally defined as nanoparticle, and particles having a diameter of substantially 500 nm or less, specifically 200 nm or less, more specifically, a diameter of 100 nm or less, and even more specifically, a diameter of 50 nm or less.

In the present disclosure, the negative electrode material for a secondary battery includes, but is not necessarily limited to, a lithium negative electrode material for a secondary battery. The negative electrode material of the present disclosure may be used as an active material in secondary batteries, such as a sodium battery, an aluminum battery, a magnesium battery, a calcium battery, and a zinc battery, and may also be used in other energy storage/generation devices that use conventional silicon-based materials, such as a super capacitor, a dye-sensitized solar cell, and a fuel cell.

A negative electrode material for a secondary battery according to one aspect (I) of the present disclosure includes: a matrix containing silicon oxide, a composite oxide of silicon with at least one doping element selected from the group consisting of alkali metals, alkaline earth metals and post-transition metals, or a mixture thereof; and silicon nanoparticles dispersed and embedded in the matrix, in which, during a charge-discharge test using a half-cell in which a counter electrode is a metal lithium foil, according to the following charge/discharge cycle conditions, the following Formula 1 is satisfied, and, in an X-ray diffraction pattern using $CuK\alpha$ rays, the ratio ($A_1/A_2$) of a first peak area ($A_1$) in which the diffraction angle $2\theta$ is located in the range of 10° to 27.4° and a second peak area ($A_2$) in which the diffraction angle $2\Theta$ is located in the range of $28 \pm 0.5°$ satisfies 0.8 to 6.

Charge/discharge cycle conditions: constant current/constant voltage (CC/CV), cut-off voltage 0.005 V to 1.0 V, 0.5 charge/discharge rate (C-rate).

(Formula 1)

$$95 \ \% \ \leq \ C50/C1*100$$

(In Formula 1, C1 is discharge capacity (mAh/g) of a negative electrode material at a first charge/discharge cycle, and C50 is discharge capacity of a negative electrode material at a 50th charge/discharge cycle) In this case, C1 in the first charge/discharge cycle may be the discharge capacity of the negative electrode material measured after a formation is performed once and/or twice.

Specifically, Formula 1 is an indicator indicating a capacity retention rate during 50 charge/discharge processes, and the negative electrode material for a secondary battery according to the present disclosure includes a matrix containing silicon oxide, a composite oxide of silicon with at least one doping element selected from the group consisting of alkali metals, alkaline earth metals and post-transition metals, or a mixture thereof; and silicon nanoparticles dispersed and embedded in the matrix, in which, during a charge-discharge test according to specific charge/discharge cycle conditions using a half-cell in which the counter electrode is a metal lithium foil, a capacity retention rate is 95% or more and in an X-ray diffraction pattern using $CuK\alpha$ rays, the ratio ($A_1/A_2$) of a first peak area ($A_1$) in which the diffraction angle $2\theta$ is located in the range of 10° to 27.4° and a second peak area ($A_2$) in which the diffraction angle $2\Theta$ is located in the range of $28\pm0.5°$ satisfies 0.8 to 6. As a result, the negative electrode material for a secondary battery may have the improved mechanical and electrochemical properties and the capacity retention rate of a level capable of practical commercialization of the secondary battery equipped with silicon-based negative electrode material. Hereinafter, unless otherwise limited, the electrochemical properties (discharge capacity, change in volume during lithiation, dQ/dV graph, etc.) of the negative electrode material, including the charge/discharge characteristics, may be electrochemical properties of the negative electrode containing the negative electrode material and the half-cell in which the counter electrode is the metal lithium foil, and may be electrochemical properties of the half-cell in which the formation is performed. Therefore, it goes without saying that the first cycle according to the charge/discharge cycle conditions in the charge-discharge test also means the first cycle performed after the formation is performed.

In this case, the formation may include a primary process in which the charge/discharge is performed under the conditions of CC/CV, a cut-off voltage of 0.005V to 1.5V, and 0.1C-rate and a secondary process in which the charge/discharge is performed under the condition of CC/CV, a cut-off voltage of 0.005V to 1.0V, and 0.1C-rate, but of course, the present disclosure cannot be limited by the formation conditions of the test cell (half-cell), and in order to test the electrochemical properties of the conventional negative electrode materials, the formation normally performed in the cell used is sufficient.

In addition, here, the half-cell may be a cell including: a negative electrode that includes a negative electrode current collector and a negative electrode active material layer located on at least one side of the current collector and including a negative electrode material according to an embodiment of the present disclosure ; a counter electrode which is a metallic lithium foil; a separator that is disposed between the negative electrode and the opposite electrode; and an electrolyte in which $LiPF_6$ is dissolved at a concentration of 1M in a mixed solvent in which ethylene carbonate and diethyl carbonate are mixed at a volume ratio of 1:1, in which the electrochemical properties of the half-cell may be measured at room temperature.

In one embodiment, C50/C1*100 in Formula 1 may be 95% or more, 96% or more, 97% or more, 98% or more, or 99% or more.

The cycle characteristics refer to that the storage and release of lithium ions from the negative electrode material is substantially completely reversible, and refer to that deterioration in capacity (deterioration in the negative electrode material, deterioration in electrical contact of the negative electrode material within the negative electrode active material layer, formation of irreversible products, etc.) does not occur substantially during the repetitive charge/discharge process of up to 50 times, and it has an extremely excellent capacity retention rate.

In one embodiment, C50 may be 1150 mAh/g or more, 1200 mAh/g or more, 1250 mAh/g or more, 1300 mAh/g or more, 1350 mAh/g or more, or 1450 mAh/g or more, and may be substantially 2450 mAh/g or less.

In one embodiment according to the present disclosure, in the X-ray diffraction pattern of the negative electrode material using $CuK\alpha$ rays, the ratio ($A_1/A_2$) of a first peak area ($A_1$) in which the diffraction angle $2\theta$ is located in the range of 10° to 27.4° and a second peak area ($A_2$) in which the diffraction angle $2\Theta$ is located in the range of $28\pm0.5°$ satisfies 0.8 to 8, specifically 0.8 to 6, and more specifically 0.8 to 5.5.

In this case, an area of each peak in the X-ray diffraction pattern means an integrated area occupied by each peak. Here, the integrated area may be an integrated area after performing peak fitting on a peak from which a noise level has been removed using a Gaussian function and/or Lorentz function, but a method of deriving an area of an X-ray diffraction (XRD) peak known in the art can be used without limitation as long as the areas of the above-described first and second peaks are derived by the same method.

As a specific example, after a noise level around a peak to be separated is removed using a peak analyzer tool function of an origin program, which is one of the application software, and the peak is divided into two by applying a Gaussian function, the above-described XRD peak area may be calculated, but the present disclosure is not limited thereto.

In one embodiment, the ratio ($L_1/L_2$) of the full width at half maximum (FWHM($L_1$)) of the first peak and the full width at half maximum (FWHM($L_2$)) of the second peak in the X-ray diffraction pattern may be 1 to 20, specifically 3 to 18, more specifically 6 to 15, and even more specifically 6.5 to 13.

In another embodiment, the intensity ratio ($I_1/I_2$) between the maximum intensity ($I_1$) of the first peak and the maximum intensity ($I_2$) of the second peak may be 0.05 to 1.25, specifically 0.05 to 1.05, and more specifically 0.08 to 0.75. In this case, the first peak may be derived from amorphous silicon oxide, and the second peak may be derived from crystalline silicon. In this way, the negative electrode material of a secondary battery containing amorphous silicon oxide may have an excellent capacity retention rate since the negative electrode material may buffer volume expansion during the charging of the secondary battery.

The negative electrode material for a secondary battery according to another aspect (II) of the present disclosure includes: a matrix containing silicon oxide, a composite oxide of silicon with at least one doping element selected from the group consisting of alkali metals, alkaline earth metals and post-transition metals, or a mixture thereof; and silicon nanoparticles dispersed and embedded in the matrix, in an X-ray diffraction pattern using CuK$\alpha$ rays, the ratio ($A_1/A_2$) of a first peak area ($A_1$) in which the diffraction angle $2\Theta$ is located in the range of 10° to 27.4° and a second peak area ($A_2$) in which the diffraction angle $2\Theta$ is located in the range of 28±0.5° satisfies 0.8 to 6 and may satisfy the following Formula 2.

$$(\text{Formula 2})$$

$$1 < WN(Si)/WN(ref)$$

(In Formula 2, WN(ref) denotes a central wave number of the Raman peak of the bulk single crystal silicon, and WN(Si) denotes a central wave number of the Raman peak of the nanoparticulate silicon contained in the negative electrode material.)

In this case, in the above Formula 2, the ratio between the central wave number of the Raman peak of the bulk single crystal silicon and the central wave number of the Raman peak of the nanoparticulate silicon contained in the negative electrode material is a parameter that indicates the type and size of stress (residual stress) remaining in the silicon nanoparticles dispersed and embedded in the matrix. In addition, in the above Formula 2, the term bulk single crystal silicon should be interpreted as meaning silicon of a size that substantially exhibits the physical properties of the bulk single crystal silicon. In terms of providing a clear comparison standard and ensuring ease of purchase, the bulk single crystal silicon may refer to a single crystal silicon wafer having a thickness of the sub mm order, and as a specific example, a thickness of 0.4 to 0.7 mm.

Specifically, in the above Formula 2, WN(Si)/WN(ref) exceeding 1 means that the central wave number of the Raman peak of nanoparticulate silicon contained in the negative electrode material moves to a longer wave number (shorter wavelength than a wavelength of Raman scattered light) compared to the bulk single crystal silicon, which means that the nanoparticulate silicon has the residual compressive stress.

As described above, the negative electrode material for a secondary battery according to the present disclosure includes the silicon nanoparticles dispersed and embedded in the matrix and having the residual compressive stress and in the X-ray diffraction pattern using CuK$\alpha$ rays, the ratio ($A_1/A_2$) of the first peak area ($A_1$) in which the diffraction angle $2\theta$ is located in the range of 10° to 27.4° and the second peak area ($A_2$) in which the diffraction angle $2\Theta$ is located in the range of 28±0.5° satisfies 0.8 to 6. As a result, the negative electrode material for a secondary battery may have an advantage of having the improved mechanical and electrochemical properties due to the silicon nanoparticles having the uniform residual compressive stress, and in particular, having the high discharge capacity and the capacity retention rate of a level capable of practical commercialization of the secondary battery equipped with the silicon-based negative electrode material. In detail, the compressive stress, which is the main residual stress of the silicon nanoparticles dispersed and embedded in the matrix and included in the negative electrode material according to the present disclosure may be uniform according to the crystallographic characteristics in which, in the above-described X-ray diffraction pattern, the ratio ($A_1/A_2$) between the area ($A_1$) of the first peak and the area ($A_2$) of the second peak satisfies 0.8 to 6.

In the above Formula 2, the Raman peak of the silicon in each of the bulk single crystal silicon and nanoparticulate silicon may refer to a Raman peak located in a region of 500 to 540 cm$^{-1}$, specifically in an area of 510 to 530 cm$^{-1}$, and more specifically in an area of 515 to 528 cm$^{-1}$ in the Raman spectrum of the silicon. The central wave number of the peak, that is, the wave number corresponding to the center of the peak, may refer to the wave number with the maximum intensity value at the peak. In this case, when two or more Raman peaks exist in the above-described Raman shift area, the peak having the maximum intensity may correspond to the Raman peak of silicon in the above Formula 2, and when two or more Raman peaks overlap each other to indicate a bimodal shape. In this case, the wave number with the maximum intensity value in the stronger intensity of the twin peaks may correspond to the central wave number of the peak. As an example, during the stress analysis of silicon nanoparticles at 20 different random positions in a 20 mm × 20 mm specimen (negative electrode material), the compressive stress was 80% or more, substantially 85% or more, more substantially 90% or more, and although the upper limit is not limited, the compressive stress may be substantially 99% or less. As the macro-scale negative electrode material contains silicon nanoparticles with residual compressive stress throughout the specimen, the practical commercialization of secondary batteries equipped with silicon-based negative electrode material is possible due to significantly improved mechanical and electrochemical properties. In addition, the difference between WN(Si) and WN(ref) (WN(Si)-WN(ref)) is a parameter that directly indicates the size of the residual compressive stress of silicon nanoparticles. Specifically, the difference between WN(Si) and WN(ref) is more than $0.1 \text{ cm}^{-1}$ or more, $0.2 \text{ cm}^{-1}$ or more, $0.3 \text{ cm}^{-1}$ or more, $0.4 \text{ cm}^{-1}$ or more, $0.5 \text{ cm}^{-1}$ or more, $0.6 \text{ cm}^{-1}$ or more, $0.7 \text{ cm}^{-1}$ or more, $0.8 \text{ cm}^{-1}$ or more, $0.9 \text{ cm}^{-1}$ or more, $1.0 \text{ cm}^{-1}$ or more, $1.1 \text{ cm}^{-1}$ or more, $1.2 \text{ cm}^{-1}$ or more, $1.3 \text{ cm}^{-1}$ or more, $1.4 \text{ cm}^{-1}$ or more, $1.5 \text{ cm-1}$ or more, $1.6 \text{ cm}^{-1}$ or more, $1.7 \text{ cm}^{-1}$ or more, $1.8 \text{ cm}^{-1}$ or more, $1.9 \text{ cm}^{-1}$ or more, $2.0 \text{ cm}^{-1}$ or more, $2.1 \text{ cm}^{-1}$ or more, $2.2 \text{ cm}^{-1}$ or more, $2.3 \text{ cm}^{-1}$ or more, $2.4 \text{ cm}^{-1}$ or more, $2.5 \text{ cm}^{-1}$ or more, $2.6 \text{ cm}^{-1}$ or more, $2.7 \text{ cm}^{-1}$ or more, $2.8 \text{ cm}^{-1}$ or more, $2.9 \text{ cm}^{-1}$ or more, $3.0 \text{ cm}^{-1}$ or more, $3.1 \text{ cm}^{-1}$ or more, $3.2 \text{ cm}^{-1}$ or more, $3.3 \text{ cm}^{-1}$ or more, $3.4 \text{ cm}^{-1}$ or more, $3.5 \text{ cm}^{-1}$ or more, $3.6 \text{ cm}^{-1}$ or more, $3.7 \text{ cm}^{-1}$ or more, $3.8 \text{ cm}^{-1}$ or more, $3.9 \text{ cm}^{-1}$ or more, and $4.0 \text{ cm}^{-1}$ or more, substantially $6.0 \text{ cm}^{-1}$ or less, and more substantially $5.5 \text{ cm}^{-1}$ or less. Together with or independently of the difference between the center wavelengths of the Raman peaks of the bulk single crystal silicon and the nanoparticulate silicon contained in the negative electrode material, the full width at half maximum (FWHM) of the Raman peak of the nanoparticulate silicon contained in the negative electrode material may be larger than the full width at half maximum (FWHM) of the Raman peak of the bulk single crystal silicon. The larger full width at half maximum (FWHM) value compared to the bulk single crystal silicon may be due to the structure in which the silicon contained in the negative electrode material is dispersed and embedded in the matrix in the ultrafine particle form. Specifically, the full width at half maximum (FWHM) of the nanoparticulate silicon Raman peak contained in the negative electrode material is 4 to $20 \text{ cm}^{-1}$, 6 to $20 \text{ cm}^{-1}$, 6 to $18 \text{ cm}^{-1}$, 6 to $16 \text{ cm}^{-1}$, 8 to $20 \text{ cm}^{-1}$, 8 to $18 \text{ cm}^{-1}$, 8 to $16 \text{ cm}^{-1}$, 10 to $20 \text{ cm}^{-1}$, 10 to $18 \text{ cm}^{-1}$, or 10 to $16 \text{ cm}^{-1}$, but is necessarily limited thereto. Together with or independently of this, based on the central wave number of the Raman peak of silicon ($0\text{cm}^{-1}$), the nanoparticulate silicon contained in the negative electrode material may significantly different from each other with respect to intensity ($K_1$) at the $+20 \text{ cm}^{-1}$ position (wave number) based on the Raman spectrum and intensity ($K_2$) at $-20 \text{ cm}^{-1}$ position (wave number) based on the Raman spectrum, and the intensity ($K_2$) at the $-20 \text{ cm}^{-1}$ position (wave number) may be greater than the intensity ($K_1$) at the $+20 \text{ cm}_{-1}$ position (wave number). In this case, the significant difference may mean that the ratio of $K_2/K_1$ is 1.20 or more. The asymmetry (long tail in the short wave number direction) of the silicon Raman peak may also be due to the structure in which the silicon nanoparticles with residual compressive stress are dispersed and embedded in the matrix. In addition, during the two-dimensional mapping analysis of the negative electrode material based on the Raman signal of silicon, the difference between the maximum and minimum values of the shift defined by the following Formula 3 may be $5 \text{ cm}^{-1}$ or less. (Formula 3) Shift = $WN^i$ (Si) -WN(ref) (In the above Formula 3, WN(ref) is the same as a regulation in Formula 2, and $WN^i$(Si) is the central wave number of the Raman peak of the nanoparticulate silicon contained in the negative electrode material in one pixel which is a unit analysis area during mapping analysis.) In this case, for the shift in the above Formula 3, in the two-dimensional Raman map obtained by the two-dimensional mapping analysis, the shift according to Formula 3 may be calculated at each pixel only for the pixels in which the silicon Raman signal is detected, and of course, the maximum and minimum values mean the minimum and maximum values among the deviations calculated according to the above Formula 3. Based on the two-dimensional Raman map of silicon obtained through the two-dimensional mapping analysis of the negative electrode material based on the Raman signal of silicon, the difference between the maximum and minimum values of the central wave number shift value (shift) of the silicon peak compared to the bulk single crystal silicon according to the above Formula 3 is an indicator of the residual compressive stress uniformity of the silicon nanoparticles dispersed and embedded in the negative electrode material. The difference between the maximum and minimum shift values based on the 2D Raman map may satisfy $5.0 \text{ cm}^{-1}$ or less, $4.5 \text{ cm}^{-1}$ or less, $4.0 \text{ cm}^{-1}$ or less, $3.5 \text{ cm}^{-1}$ or less, $3.0 \text{ cm}^{-1}$ or less, $2.5 \text{ cm}^{-1}$ or less, or $1.0 \text{ cm}^{-1}$ or less, and substantially, the difference between the maximum and minimum values may satisfy $0.1 \text{ cm}^{-1}$ or more, and more substantially, the difference between the maximum and minimum values may satisfy $0.5 \text{ cm}^{-1}$ or more. The difference between the maximum and minimum value means that most of the silicon nanoparticles contained in the negative electrode material, and substantially all the silicon nanoparticles have the residual compressive stress, and furthermore, means that the size of the compressive stress remaining in most of the silicon nanoparticles contained in the negative electrode material, and substantially all the silicon nanoparticles, is substantially almost the same. Experimentally, the Raman spectrum of silicon contained in the negative electrode material may be measured under the conditions of an excitation laser wavelength of 532 nm, a laser power of 0.5 mW, a spectrometer resolution of $1 \text{ cm}^{-1}$, a negative electrode material of 1 g, and a detector exposure time of 15s, under the room temperature (20 to 25°C) and the atmospheric pressure. Experimentally, the two-dimensional Raman mapping of the negative electrode material using the silicon Raman signal may be measured under the mapping conditions of excitation laser wavelength = 532 nm, laser power = 0.1 mW, a detector exposure time (exposure time per unit analysis area) of 1 sec, focal length = 30 mm, grating = 1800 grooves/mm, pixel resolution = 1 cm$^{-1}$, and mapping size = 14 $\mu$m $\times$ 14 um, and may be measured under the room temperature and atmospheric pressure. As one specific example, during the shift analysis based on the Raman signal of silicon at 20 different random positions in a specimen of 20 mm $\times$ 20 mm, the difference between the maximum and minimum values defined by the above Formula 3 may satisfy 5.0cm$^{-1}$ or less, 4.5 cm$^{-1}$ or less, 4.0 cm$^{-1}$ or less, 3.5 cm$^{-1}$ or less, 3.0 cm$^{-1}$ or less, 2.5 cm$^{-1}$ or less, or 1.0 cm$^{-1}$ or less, substantially, the difference between the maximum and minimum values may be 0.1 cm$^{-1}$ or more, and more substantially 0.5 cm$^{-1}$ or more. This means that the sizes of the compressive stress remaining in not only the mapping area, but also substantially all the silicon nanoparticles included in the entire specimen, that is, substantially the entire specimen, are substantially the same. In this case, the Raman spectrum and two-dimensional Raman mapping used in the shift analysis may have been measured under the same conditions as described above. The negative electrode material for a secondary battery according to another aspect (III) of the present disclosure is the particle phase that includes a matrix containing silicon oxide, a composite oxide of silicon with at least one doping element selected from the group consisting of alkali metals, alkaline earth metals, and post-transition metals, or a mixture thereof and silicon nanoparticles dispersed and embedded in the matrix, in which the compressive strength (St) of the particle is 100 MPa or more, and in the X-ray diffraction pattern using CuK$\alpha$ rays, the ratio (A$_1$/A$_2$) of the first peak area (A$_1$) in which the diffraction angle 2$\Theta$ is located in the range of 10° to 27.4° and the second peak area (A$_2$) in which the diffraction angle 2$\Theta$ is located in the range of 28$\pm$0.5° may satisfy 0.8 to 6.As is known, the compressive strength St of the particle may be calculated according to Formula St=2P/$\pi$dL, where P is an applied force, d is a particle size of the particle, and L is a length of the particle, and may be measured using a micro compression tester (for example, MCT-W500-E, Shimadzu).Specifically, the compressive strength of the particle negative electrode material for a secondary battery, which is the particle form, is 100 MPa or more, 105 MPa or more, 110 MPa or more, 115 MPa or more, 120 MPa or more, 125 MPa or more, 130 MPa or more, 135 MPa or more, 140 MPa or more, 145 MPa or more, 150 MPa or more, 155 MPa or more, or 160 MPa or more, substantially 250 MPa or less, and more substantially 200 MPa or less. The negative electrode material for a secondary battery according to the present disclosure is the particle phase containing silicon nanoparticles dispersed and embedded in the above-described matrix and exhibits the excellent compressive strength of 100 MPa or more, and in the X-ray diffraction pattern using CuK$\alpha$ rays, the ratio (A$_1$/A$_2$) of the first peak area (A$_1$) in which the diffraction angle 2$\Theta$ is located in the range of 10° to 27.4° and the second peak area (A$_2$) in which the diffraction angle 2$\theta$ is located in the range of 28$\pm$0.5° satisfies 0.8 to 6. As a result, the negative electrode material for a secondary battery may have an advantage of having the improved mechanical and electrochemical properties, and in particular, having the high discharge capacity and the capacity retention rate of a level capable of practical commercialization of the secondary battery equipped with silicon-based negative electrode material. In addition, the negative electrode material with excellent particle compressive strength means that the particulate negative electrode material is not physically damaged during the electrode manufacturing process from preparing the negative electrode material slurry established in the conventional secondary battery field-applying and drying the slurry on the current collector-to rolling (calendering) and means that as the damage to the pore structure of the electrode (negative electrode) is also prevented, the stable and homogeneous contact with the electrolyte may be ensured as designed. As a result, the negative electrode material for a secondary battery of the present disclosure may have the advantage of ensuring structural integrity and stable battery performance. In detail, the mechanical properties of the negative electrode material with excellent particle compressive strength are property values that may be realized by the residual stress present in the negative electrode material, including the residual compressive stress of nanoparticulate silicon. In this case, the residual stress of the silicon nanoparticles dispersed and embedded in the matrix included in the negative electrode material may exist in the form of tensile stress, compressive stress, or a mixture of tensile stress and compressive stress. However, the compressive stress, which is the main residual stress of the silicon nanoparticles dispersed and embedded in the matrix contained in the negative electrode material according to the present disclosure, may be uniform according to the crystallographic characteristics in which the ratio (A$_1$/A$_2$) between the area of the first peak (A$_1$) and the area of the second peak (A$_2$) satisfies 0.8 to 6, in the X-ray diffraction pattern described above. Furthermore, the above-described mechanical strength may be further improved by forming the stress field in the matrix surrounding the silicon nanoparticles with the residual compressive stress due to the coherent interface between the silicon nanoparticles and the matrix. Here, the residual compressive stress of the nanoparticulate silicon, which implements the mechanical property values of the negative electrode material, may be determined by the central wave number of the Raman peak of the nanoparticulate silicon based on the central wave number of the Raman peak of the bulk single crystal silicon as described above. The negative electrode material for a secondary battery according to another aspect (IV) of the present disclosure includes: a matrix containing silicon oxide, a composite oxide of silicon with at least one doping element selected from the group consisting of alkali metals, alkaline earth metals, and post-transition metals, or a mixture thereof; and silicon nanoparticles dispersed and embedded in the matrix, in which the hardness according to the nano-indentation test is 4.0 GPa or more and the elastic modulus (Young's modulus) is 40 GPa or more, and in the X-ray diffraction pattern using CuK$\alpha$ rays, the ratio (A$_1$/A$_2$) of the first peak area (A$_1$) in which the diffraction angle 2$\Theta$ is located in the range of 10° to 27.4° and the second peak area ($A_2$) in which the diffraction angle $2\Theta$ is located in the range of $28\pm0.5°$ may satisfy 0.8 to 6.Hereinafter, with regard to the mechanical properties of the negative electrode material for a secondary battery, unless specifically limited to temperature, all the properties are room temperature (20 to 25°C) properties. Here, the nano-indentation test may be measured in accordance with ASTM E2546, ISO 14577-1 E, ISO 14577-2 E, and ISO 14577-3 E, and as is known, the elastic modulus E may be calculated according to the Formula $E=E^* \cdot (1-v^2)$. Here, $E^*$ is the elastic modulus of the indenter, and $v$ is the Poisson's ratio of the Berkovich indenter and is assumed to be 0.3. The nano-indentation test using the Bulkovich indenter may be performed under the conditions of a maximum load of 50 mN and a load application speed of 100 mN/min. The strength and elastic modulus measured by the nano-indentation test may be values obtained by averaging the physical property values obtained by performing the nano-indentation test in the form of a $5 \times 5$ to $25 \times 25$ matrix in which the separation distance between indentation traces based on the indentation trace is at least 10 um. In this case, the negative electrode material sample on which the nano-indentation test is performed can be prepared by mounting and polishing a plate-shaped bulk negative electrode material. Specifically, the negative electrode material for a secondary battery, the strength (indentation strength) of 4.0 GPa or more, 4.5 GPa or more, 5.0 GPa or more, 5.5 GPa or more, 6.0 GPa or more, 6.5 GPa or more, 7.0 GPa or more, 7.5 GPa or more, 8.0 GPa or more, 8.5 GPa or more, 9.0 GPa or more, 9.5 GPa or more, 10.0 GPa or more, 10.2 GPa or more, 10.4 GPa or more, 10.6 GPa or more, 10.8 GPa or more, 11.0 GPa or more, 11.2 GPa or more, 11.4 GPa or more, 11.6 GPa or more, 11.8 GPa or more, 12.0 GPa or more, 12.2 GPa or more, 12.4 GPa or more, 12.6 GPa or more, 12.8 GPa or more, or 13.0 GPa or more based on the nano-indentation test, substantially 25.0 GPa or less, and more substantially 20.0 GPa or less. In addition, the negative electrode material for a secondary battery may have an elastic modulus of 40 GPa or more, 41 GPa or more, 42 GPa or more, 43 GPa or more, 44 GPa or more, 45 GPa or more, 50 GPa or more, or 55 GPa or more based on the nano-indentation test, substantially 250 GPa or less, and more substantially 200 GPa or less.As described above, the negative electrode material for a secondary battery according to the present disclosure includes the silicon nanoparticles dispersed and embedded in the matrix, exhibits the high strength of 4.0 GPa or more and the excellent elastic modulus (Young's modulus) of 40 GPa or more as measured in the nano-indentation test, and in the X-ray diffraction pattern using CuK$\alpha$ rays, the ratio ($A_1/A_2$) of the first peak area ($A_1$) in which the diffraction angle $2\Theta$ is located in the range of 10° to 27.4° and the second peak area ($A_2$) in which the diffraction angle $2\theta$ is located in the range of $28\pm0.5°$ satisfies 0.8 to 6. As a result, the negative electrode material for a secondary battery may have an advantage of having the improved mechanical and electrochemical properties, the high discharge capacity, and the capacity retention rate of a level capable of practical commercialization of the secondary battery equipped with silicon-based negative electrode material. In addition, since the negative electrode material with high strength and excellent elasticity not only prevents the physical damage to the particulate negative electrode material during the conventional electrode manufacturing process, especially during the rolling process, in addition to the excellent compressive strength characteristics of the particles described above, but also stably maintains the pore structure of the electrode (negative electrode), the structural integrity of the negative electrode material for a secondary battery of the present disclosure may be further improved. The negative electrode material for a secondary battery according to another aspect (V) of the present disclosure includes a matrix containing silicon (Si), a doping element (D) selected from the group consisting of alkali metals, alkaline earth metals, and post-transition metals and silicon, and oxygen (O) based on elemental composition; and silicon nanoparticles dispersed and embedded in the matrix, and has the composition uniformity satisfying the following Formula 4, in which in the X-ray diffraction pattern using CuK$\alpha$ rays, the ratio ($A_1/A_2$) of the first peak area ($A_1$) in which the diffraction angle $2\Theta$ is located in the range of 10° to 27.4° and the second peak area ($A_2$) in which the diffraction angle $2\theta$ is located in the range of $28\pm0.5°$ satisfies 0.8 to 6. (Formula 4)B/A $\leq$ 0.65In this case, A and B in the Formula 4 are the average value (A) and standard deviation (B) of the content (wt%) of the doping element measured at 100 random points based on the cross section across the center of the negative electrode material. Specifically, A and B may be the average content (wt%, A) and standard deviation (B) of the doping element calculated from 100 random points in the line profile of the doping element crossing the center of the cross section of the negative electrode material, and more specifically, B/A in Formula 3 may satisfy 0.65 or less, 0.60 or less, 0.55 or less, 0.50 or less, 0.40 or less, or 0.30 or less, and may be 0.2 or more. In the above Formula 4, B/A is a parameter that represents the composition uniformity of the negative electrode material based on the doping element (D), and the negative electrode material may represent the uniform mechanical and electrochemical properties by the excellent composition uniformity of B/A that satisfies the above-described range. In the negative electrode material for a secondary battery that satisfies the composition uniformity described above, based on the elemental composition, the matrix may contain a doping element (D), silicon (Si), and oxygen (O) selected from the group of alkali metals, alkaline earth metals, and post-transition metals, and based on the compound composition, the matrix may include silicon oxide and a composite oxide of silicon and doping element. Accordingly, the composition uniformity of the doping element defined in Formula 4 may correspond to the composition uniformity of the composite oxide, but is not necessarily interpreted as being limited thereto. Here, the content or linear composition of the doping element may be performed experimentally using energy dispersive X-ray spectroscopy (EDS), etc., equipped with an electron probe micro analyzer (EPMA), a transmission electron microscope, or a scanning electron microscope, but is not limited thereto. In addition, in one embodiment, the negative electrode material including the plurality of negative electrode material particles may have the inter-particle composition uniformity according to the following Equation 5.

$$(Formula\ 5)\ 1.3 \leq UF(D)$$

(In the above Formula 5, UF(D) is a value obtained by dividing an average doping element composition between negative electrode material particles divided by a standard deviation of a doping element composition, based on weight percent composition.) In this case, the plurality of negative electrode material particles may be 10 to 500, substantially 50 to 300, and more substantially 100 to 200. Specifically, the UF(D) in the above Formula 5 may satisfy 1.3 or more, 1.5 or more, 2 or more, 2.5 or more, 3 or more, or 5 or more, and may be substantially 8 or less. The above-described UF(D) is a parameter representing the composition uniformity between the negative electrode material particles in the negative electrode material including the plurality of negative electrode material particles. Since the UF(D) of the above Formula 5 satisfies the above-described range, the negative electrode material containing the plurality of negative electrode material particles has the excellent composition uniformity, even if the plurality of negative electrode material particles are included, there is an advantage that the mechanical and electrochemical properties of the negative electrode material may be exhibited more uniformly. The negative electrode material for a secondary battery according to another aspect (VI) of the present disclosure includes: a matrix containing silicon oxide, a composite oxide of silicon with at least one doping element selected from the group consisting of alkali metals, alkaline earth metals, and post-transition metals, or a mixture thereof; and silicon nanoparticles dispersed and embedded in the matrix, in which when charging up to 0.005V based on the negative electrode active material layer formulated with 80wt% of negative electrode material, 10wt% of conductive material, and 10wt% of binder and the change in volume of the negative electrode active material layer is within 60%, and in the X-ray diffraction pattern using CuK$\alpha$ rays, the ratio ($A_1/A_2$) of the first peak area ($A_1$) in which the diffraction angle 2$\Theta$ is located in the range of 10° to 27.4° and the second peak area ($A_2$) in which the diffraction angle 2$\Theta$ is located in the range of 28$\pm$0.5° may satisfy 0.8 to 6. The conventional silicon-based negative electrode materials, which have a theoretical capacity of up to 4,200 mAh/g, have the disadvantage of significantly lowering the capacity retention rate due to the phenomenon that the volume change of approximately 300% or more occurs during charging and thus the negative electrode material is detached from the current collector. On the other hand, the negative electrode material for a secondary battery according to another aspect (VI) of the present disclosure includes: a matrix containing silicon oxide, a composite oxide of silicon with at least one doping element selected from the group consisting of alkali metals, alkaline earth metals, and post-transition metals, or a mixture thereof; and silicon nanoparticles dispersed and embedded in the above-described matrix, in which when charging up to 0.005V based on the negative electrode active material layer formulated with 80wt% of negative electrode material, 10wt% of conductive material, and 10wt% of binder and the change in volume of the negative electrode active material layer is within 60%, and, and in the X-ray diffraction pattern using CuK$\alpha$ rays, the ratio ($A_1/A_2$) of the first peak area ($A_1$) in which the diffraction angle 2$\Theta$ is located in the range of 10° to 27.4° and the second peak area ($A_2$) in which the diffraction angle 2$\Theta$ is located in the range of 28$\pm$0.5° may satisfy 0.8 to 6. As a result, the negative electrode material for a secondary battery has an advantage of having the improved mechanical and electrochemical properties according, having the high discharge capacity, and having the capacity retention rate of a level capable of practical commercialization of the secondary battery equipped with a silicon-based negative electrode material. Specifically, the above-described volume change (%) is the volume change of the negative electrode active material layer containing the negative electrode material, and may be defined as [negative electrode active material layer thickness after lithiation - negative electrode active material layer thickness before lithiation]/thickness of negative electrode active material layer before lithiation * 100. Experimentally, the thickness of the negative electrode active material layer before and after the lithiation may be measured through the scanning electron microscope observation photographs, etc. When charging the battery containing the negative electrode active material layer to 0.005 V, the volume change within 60%, specifically within 50%, within 40%, within 30%, within 20%, or within 15% means that a significantly smaller volume change occurs compared to the conventional silicon-based negative electrode material, and means that the main problem of the conventional silicon-based negative electrode materials, such as cracking and/or detachment of the electrode due to volume expansion, is largely eliminated. The negative electrode active material layer, which serves as a standard for testing the degree of volume expansion of the negative electrode material, may contain 80wt% of negative electrode material and 10wt% of a conductive material described above, specifically 10wt% of carbon black and 10wt% of a binder, and specifically 5wt% of carboxymethyl cellulose and 5wt% of styrene butadiene rubber. In the negative electrode provided with a negative electrode active material layer, the current collector may be copper foil. Although not particularly limited, the thickness of the negative electrode active material layer before the lithiation may be in the range of 15 to 25 um. In this case, the above-described charging may be performed by the charge-discharge test according to the following charge/discharge cycle conditions using the negative electrode containing negative electrode material and the half-cell in which the counter electrode is a metallic lithium foil, and the charging may be performed up to 0.005 V in the charge/discharge cycle, specifically, the first charge/discharge cycle. Charge/discharge cycle conditions: CC/CV, Cut-off voltage 0.005 V to 1.0 V, 0.5C-rate

The negative electrode material for a secondary battery according to another aspect (VII) of the present disclosure includes: a matrix containing silicon oxide, a composite oxide of silicon with at least one doping element selected from the group consisting of alkali metals, alkaline earth metals, and post-transition metals, or a mixture thereof; and silicon nanoparticles dispersed and embedded in the matrix, in which in the dQ/dV graph obtained by the charge-discharge test according to the following charge/discharge cycle condition 1 using the half-cell in which counter electrode is a metal lithium foil, there is a lithium insertion peak corresponding to the $Li_{3.75}Si$ reaction, the discharge capacity in the first charge/discharge cycle according to the following charge/discharge cycle condition 2 is 1200 mAh/g or more, and in the X-ray diffraction pattern using $CuK\alpha$ rays, the ratio ($A_1/A_2$) of the first peak area ($A_1$) in which the diffraction angle $2\Theta$ is located in the range of 10° to 27.4° and the second peak area ($A_2$) in which the diffraction angle $2\theta$ is located in the range of 28±0.5° satisfies 0.8 to 6.Charge/discharge cycle condition 1: CC/CV, Cut-off voltage 0.005V to 1.0V, 0.1C-rate

Charge/discharge cycle condition 2: CC/CV, Cut-off voltage 0.005V to 1.0V, 0.5C-rate

Specifically, the negative electrode material for a secondary battery according to the present disclosure includes: a matrix containing silicon oxide, a composite oxide of silicon with at least one doping element selected from the group consisting of alkali metals, alkaline earth metals, and post-transition metals, or a mixture thereof; and silicon nanoparticles dispersed and embedded in the matrix, in which in the dQ/dV graph obtained under the above-described charge/discharge cycle conditions, there is the lithium insertion peak corresponding to the $Li_{3.75}Si$ reaction and the discharge capacity in the first charge/discharge cycle is 1200 mAh/g or more, and in the X-ray diffraction pattern using $CuK\alpha$ rays, the ratio ($A_1/A_2$) of the first peak area ($A_1$) in which the diffraction angle $2\theta$ is located in the range of 10° to 27.4° and the second peak area ($A_2$) in which the diffraction angle $2\Theta$ is located in the range of 28±0.5° satisfies 0.8 to 6. As a result, the negative electrode material for a secondary battery may have an excellent discharge capacity of over 1200mAh/g, the improved mechanical and electrochemical properties, and the capacity retention rate of a level capable of practical commercialization of the secondary battery equipped with a silicon-based negative electrode material. In more detail, the dQ/dV graph may be a graph representing the relationship between the potential V and the differential value dQ/dV obtained by differentiating the discharge capacity Q in the first charge/discharge cycle with the potential V of the negative electrode based on the metal lithium foil of the half cell. In this case, the lithium insertion peak corresponding to the $Li_{3.75}Si$ reaction on the dQ/dV graph may mean the peak located in the voltage range of 0.005V to 0.100V, specifically in the voltage range of 0.005V to 0.050V, and more specifically in the voltage range of 0.005V to 0.040V.In other words, the negative electrode material for a secondary battery according to the present disclosure means that the lithium insertion is performed beyond $Li_{3.5}Si$ to $Li_{3.75}Si$. As the lithium insertion is performed up to $Li_{3.75}Si$, the capacity of the negative electrode material may be improved. As a practical example, upon the charge/discharge according to the cycle conditions of the half-cell after the formation, that is, the first discharge capacity after the formation process may be 1200 mAh/g or more, 1250 mAh/g or more, 1300 mAh/g or more, 1350 mAh/g or more, 1400 mAh or more, 1500mAh/g or more, and may be substantially 2500mAh/g or less. The negative electrode material for a secondary battery according to another aspect (VIII) of the present disclosure includes: a matrix containing silicon oxide, a composite oxide of silicon with at least one doping element selected from the group consisting of alkali metals, alkaline earth metals and post-transition metals, or a mixture thereof; and silicon nanoparticles dispersed and embedded in the matrix and having residual compressive stress. Due to the residual compressive stress of the nanoparticulate silicon dispersed and embedded in the matrix, and furthermore, the residual compressive stress of silicon and the coherent interface formed between the silicon nanoparticles and the matrix, the stress field formed in the matrix around the silicon nanoparticles may be expressed as the physical properties of the negative electrode material or the measurable parameter in one aspect of the negative electrode material based on the Raman spectrum described above, another aspect of the negative electrode material based on the mechanical properties, still another aspect of negative electrode material based on the electrochemical properties during the lithiation. In the present disclosure, the negative electrode material may satisfy one or more, two or more, three or more, four or more, five or more, six or more, and seven or more of the above-described aspects (I to VIII) or all aspects I to VIII. Hereinafter, unless specifically described by limiting the present disclosure to 'one aspect according to the present disclosure, the contents described below apply to all aspects provided by the present disclosure. In one embodiment, the negative electrode material may contain the doping element selected from the group of silicon, oxygen, alkali metal and alkaline earth metal, and post-transition metals based on the elemental composition. The silicon may contain a silicon component in an elemental silicon state and a silicon component in an oxide state, and the silicon component in the oxide state may include an oxide state of silicon alone, a composite oxide state of silicon and a doping element, or both thereof. The doping element may contain the doping element component in the oxide state, and the doping element in the oxide state may include the oxide state of the doping element alone, the composite oxide state of the silicon and the doping element, or both thereof. Based on the compound composition, the negative electrode material may contain silicon oxide, a composite oxide of a doping element and silicon, or a mixture thereof, and may also contain elemental silicon (Si). The silicon oxide may contain $SiO_x$, in which x may be a real number from 0.1 to 2, and the composite oxide may contain $D_lSi_mO_n$, in which D may be a doping element, l may be a real number from 1 to 6, m may be a real number from 0.5 to 2, and n may be a real number that satisfies charge neutrality depending on the oxidation numbers of D and Si, respectively, and l and m. For example, when D is Mg, the composite oxide may contain one or more oxides selected from $MgSiO_3$ and $Mg_2SiO_4$, but in the present disclosure, D and the composite oxide are necessarily limited to oxides between Mg and Mg-Si. Based on the microstructure, the negative electrode material may contain a matrix containing silicon oxide; a composite oxide of silicon and one or more doping elements selected from the group of alkali metals and alkaline earth metals; or a mixture thereof; and a dispersed phase containing silicon nanoparticles. The dispersed phase may be uniformly dispersed and embedded within the matrix. In one embodiment, the silicon nanoparticles may be crystalline, amorphous, or a composite of crystalline and amorphous, and may be substantially crystalline. In one embodiment, the matrix may be crystalline, amorphous, or a mixed phase of crystalline and amorphous. In detail, the matrix may be crystalline or a composite phase in which crystalline and amorphous are mixed. Specifically, the matrix may include amorphous, crystalline or a composite oxide of silicon oxide in which amorphous and crystalline are mixed and crystalline. The interface between the silicon nanoparticle and the matrix may include a coherent interface, an incoherent interface, a semi-coherent interface, and may include a substantially the coherent interface or the semi-coherent interface, and more substantially the coherent interface. As is known, the coherent interface is an interface in which lattices of the two materials forming the interface maintain lattice continuity at the interface, the semi-coherent interface is an interface where there is a partial lattice mismatch, but this lattice mismatch part may be considered as defects such as a dislocation. Accordingly, in the negative electrode material having a coherent or semi-coherent interface between the silicon nanoparticles and the matrix, the matrix area in contact with the silicon nanoparticles may be crystalline, and specifically, may be crystalline silicon oxide, crystalline composite oxide, or a mixture thereof. Experimentally, the interface structures of the coherent interface, the incoherent interface, and the semi-coherent interface may be determined through high-magnification scanning electron microscope observation, etc., which is a well-known fact to those skilled in the art. In one embodiment, the average diameter of the silicon nanoparticles may be in the order of $10^0$ nanometers to $10^1$ nanometers, and specifically 1 to 50 nm, 2 to 40 nm, 2 to 35 nm, 2 nm to 30 nm, 2 nm to 20 nm, or 2 nm to 15 nm, but is limited thereto. However, the silicon nanoparticles at the level of 30 nm or less form the coherent interface with the matrix as a whole, and the compressive stress remaining in the silicon nanoparticles may be advantageous since stress is formed in a wider area of the matrix. Experimentally, the average diameter of the silicon nanoparticles may be calculated by measuring the size of the silicon nanoparticles in the negative electrode material through the transmission electron microscope observation image and averaging the sizes measured for 10 or more, 20 or more, or 30 or more silicon nanoparticles. In one embodiment, the doping element may be one or more selected from the group consisting of lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi). Accordingly, the composite oxide may be oxide between one or more elements selected from the group consisting of silicon, lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi) . Due to the synergistic effect between the composite oxide and the silicon nanoparticles with residual compressive stress, the mechanical and electrochemical properties of the negative electrode material may be further improved. To easily form the coherent interface with silicon nanoparticles, the doping elements may be alkali metal and alkaline earth metal groups, specifically one or more elements selected from the group consisting of lithium (Li), sodium (Na), potassium (K), rubidium (Rb), cesium (Cs), beryllium (Be), magnesium (Mg), calcium (Ca), strontium (Sr), and barium (Ba), and more advantageously is an alkaline earth metal, specifically one or more elements selected from the group consisting of magnesium (Mg), calcium (Ca), strontium (Sr), and barium (Ba). Most advantageously, in terms of synergistic effect with silicon nanoparticles with easy coherent interface formation and residual compressive stress, the doping element may include magnesium. As described above, the doping element may be contained in the negative electrode material in the form of the composite oxide with silicon and/or in the form of the oxide of the doping element, and may be mainly contained in the negative electrode material in the form of the composite oxide. Specifically, when the matrix contains the doping element in the form of the composite oxide with silicon, the composite oxide may include crystalline, and more substantially, the composite oxide may be crystalline. Accordingly, the matrix may contain crystalline composite oxide. In one embodiment, the silicon oxide contained in the matrix may include $SiO_x$, where x may satisfy a real number of 0.1 to 2 and more specifically a real number of 0.5 to 2, and include a first silicon oxide and a second silicon oxide having different x. As a substantial example, the silicon oxide contained in the matrix may include a first silicon oxide of $SiO_{x1}$ (x1 is a real number of 1.8 to 2) and a second silicon oxide of $SiO_{x2}$ (x2 is a real number of 0.8 to 1.2). The silicon oxide contained in the matrix may be crystalline, amorphous, a composite phase of crystalline and amorphous, and may be substantially amorphous. In one embodiment, the negative electrode material may contain 15 to 50wt% of nanoparticulate silicon and the balance matrix. In one embodiment, the matrix of the negative electrode material may contain both the silicon oxide and composite oxide, where when a weight part of the composite oxide based on 100 parts by weight of silicon oxide is A and the concentration of the doping element based on wt% in the negative electrode material is B, A/B may satisfy 2 to 50, 2 to 40, 2 to 30, or 2 to 20.In one embodiment, the negative electrode material may be a particle phase. The particulate negative electrode material has a particle size commonly required for use in the secondary battery, and may have, for example, an average diameter in the order of $10^0 \mu m$ to $10^1 \mu m$, specifically, an average diameter in the range of Spm to 30um, but is not limited thereto. In one embodiment, the negative electrode material may further include a coating layer containing carbon, and specifically, a surface coating layer coated on the surface of the negative electrode material. This surface coating layer is advantageous of improving the electrical properties of the negative electrode material. The thickness of the coating layer is sufficient to be 2 to 30 nm, but is not necessarily limited thereto. In one embodiment, the negative electrode material contains silicon nanoparticles with residual compressive stress, and may have an alloying ratio of 3.5 (exceeding) to 3.75 moles of lithium per 1 mole of silicon, and specifically 3.6 to 3.75 moles, when electrochemically alloyed with lithium (lithiation). This high alloying ratio is very advantageous in high capacity. In addition, in one embodiment, the negative electrode material may have high initial charge/discharge efficiency and capacity retention characteristics. The present disclosure includes the negative electrode containing the negative electrode material described above. The negative electrode may be a secondary battery, and specifically the negative electrode of a lithium secondary battery. The negative electrode may include a current collector, a negative electrode active material layer that is located on at least one side of the current collector and contains the negative electrode material described above, and if necessary, the negative electrode active material layer may further include the negative electrode material and the binder and conductive material commonly used in the secondary battery negative electrode. The present disclosure includes the secondary battery including the negative electrode described above. Specifically, the present disclosure includes the lithium secondary battery including the negative electrode described above. The lithium secondary battery may include a positive electrode including a positive electrode current collector and a positive electrode active material layer located on at least one side of the positive electrode current collector; the negative electrode described above; a separator disposed between the positive electrode and the negative electrode; and an electrolyte that conducts lithium ions. The positive electrode current collector, the negative electrode current collector, the positive electrode active material or composition of the positive electrode active material layer, and solvent, electrolyte salt, or electrolyte salt concentration of the separator and electrolyte are sufficient as materials or compositions commonly adopted in the lithium secondary battery. (Example 1) Si, $SiO_2$, and MgO raw materials were put into a powder mixer at a molar ratio of 6(Si):4.5($SiO_2$):1.5(MgO), respectively, and then mixed homogeneously to prepare a mixed raw material. Then, the mixed raw material was pelletized using a mold.26 kg of the pelletized mixed raw material was contained in a crucible in a vacuum chamber of 0.1 torr or less and heated to 1,400°C to be vaporized, and then condensed on a collection plate at 400°C to obtain magnesium-doped silicon oxide. The obtained magnesium-doped silicon oxide was heat-treated in an Ar atmosphere at 850°C for 20 hours to prepare a bulk negative electrode material for a secondary battery. The prepared bulk negative electrode material for a secondary battery was mechanically pulverized to an average particle size of 5 um to prepare particulate negative electrode material, and 5wt% of carbon was coated on the particulate negative electrode material through a CVD process at 850°C using hydrocarbon gas to prepare carbon-coated negative electrode material powder.(Example 2)Example 2 was performed in the same manner as Example 1, except that each raw material was mixed at a molar ratio of 6.5(Si):4.5($SiO_2$):0.5 (MgO). (Example 3)Example 3 was performed in the same manner as Example 1, except that each raw material was mixed at a molar ratio of 6.5(Si):4.5($SiO_2$). (Comparative Example 1)Raw materials were prepared by putting Si, $SiO_2$, and MgO raw materials into a powder mixer at a molar ratio of 6(Si):4.5($SiO_2$):1.5(MgO), respectively, and being mixed homogeneously.26 kg of the raw material was contained in a crucible in a vacuum chamber of 0.1 torr or less and heated to 1,400°C to be vaporized, and then condensed on a collection plate at 400°C to obtain magnesium-doped silicon oxide. The obtained magnesium doping silicon oxide (bulk negative electrode material for a secondary battery) was mechanically pulverized to an average particle size of 5 um to prepare particulate negative electrode material, and 5wt% of carbon was coated on the particulate negative electrode material through a CVD process at 850°C using hydrocarbon gas to prepare carbon-coated negative electrode material powder.(Comparative Example 2)24 kg of Si and $SiO_2$ mixed raw materials were put into crucible A, and 2 kg of metal Mg lump was put into crucible B. After heating crucible A to 1,500°C and crucible B to 900°C to vaporize the Si and $SiO_2$ mixed raw materials, the Si and $SiO_2$ mixed raw materials are condensed on a collection plate at 900°C to obtain magnesium doping silicon oxide. The obtained magnesium doping silicon oxide (bulk negative electrode material for a secondary battery) was mechanically pulverized to an average particle size of 5 um to prepare particulate negative electrode material, and 5wt% of carbon was coated on the particulate negative electrode material through a CVD process at 850°C using hydrocarbon gas to prepare carbon-coated negative electrode material powder.(Comparative Example 3)Comparative Example 3 was carried out in the same manner as Example 1, except that only Si raw materials were used and heating was performed at 2200°C.(Experimental Example 1) Doping element content deviation. Based on the cross section across the center of the magnesium-doped silicon oxide (Comparative Example 2) or the bulk secondary battery negative electrode material obtained by heat treatment (Example 1) before the pulverization, the average content (wt%) of the doping element calculated by measuring 100 random points in the linear composition across the center of the cross section through electron disperse spectroscopy (EDS) is calculated as A, and the standard deviation of the content is calculated as B, which was illustrated in FIG. 1. As a result of the composition analysis, B/A of the negative electrode material sample prepared in Example 1 was 0.25, and in the case of Comparative Example 2, B/A was 0.69.In addition, after pulverizing the negative electrode material of Example 1, 150 negative electrode material particles were sampled and then, the composition uniformity of the doping element included between the negative electrode material particles was analyzed. In this case, UF(D), which is a value obtained by dividing the average doping element composition (wt%) between the negative electrode material particles by the standard deviation of the doping element composition, was confirmed to be 6.2.(Experimental Example 2) X-ray diffraction (XRD) analysis. The structure of the pulverized negative electrode material through X-ray diffraction (XRD, Rigaku D/MAX-2500/PC, 40 kV, 15 mA, 4° min$^{-1}$, Cu-K$\alpha$ radiation, $\lambda$ = 0.15406 nm) analysis was confirmed. FIG. 2 is a diagram illustrating the XRD patterns of Examples 1 to 3 and Comparative Example 3. As can be seen from the drawing, in all the Examples 1 to 3 and Comparative Example 3, the peak of crystalline silicon (111) was observed at about 28°, and it was confirmed that the peaks in which the diffraction angles 20 of Examples 1 to 3 are located in the range of 10° to 27.4° showed broad peaks, whereas in the case of Comparative Example 3, there was no peak in which the diffraction angle 20 is located in the range of 10° to 27.4°. From this, it can be seen that Examples 1 to 3 contain the amorphous silicon oxide, Comparative Example 3 does not contain the amorphous silicon oxide. As a result, since Examples 1 to 3 containing the amorphous silicon oxide may buffer the volume expansion during the charging of the secondary battery, it may be advantageous in terms of the capacity retention rate of the secondary battery. Furthermore, comparing the ratio $A_1/A_2$ between the area $A_1$ of the first peak in which the diffraction angle 20 is located in the range of 10° to 27.4° with the area $A_2$ of the second peak in which the diffraction angle 20 is located, in the range of 28$\pm$0.5° in the X-ray diffraction pattern, it was confirmed that Examples 1 to 3 were in the range of 0.8 to 6.In addition, comparing, in the X-ray diffraction pattern, the intensity ratio ($I_1/I_2$) between the maximum intensity ($I_1$) of the first peak in which the diffraction angle $2\theta$ is located in the range of 10° to 27.4° and the maximum intensity ($I_2$) of the second peak in which the diffraction angle 20 is located in the range of 28 $\pm$ 0.5°, it was confirmed in Examples 1 to 3 that the intensity ratio ($I_1/I_2$) is in the range of 0.1 to 1.25, and as a result of comparing and analyzing the ratio ($L_1/L_2$) of the FWHM ($L_1$) of the first peak and the FWHM ($L_2$) of the second peak, it was confirmed in Examples 1 to 3 that intensity ratio ($I_1/I_2$) is in the range from 6 to 12. (Experimental Example 3) Raman Analysis. After the pulverization, $\mu$-Raman (Equipment name: XperRam C, Nanobase, Korea) analysis of the negative electrode material was performed under the following conditions based on the Raman signal of silicon. The Raman signal of the negative electrode material powder was illustrated in FIG. 3. As illustrated in FIG. 3, the silicon Raman signal (peak center) of the negative electrode material prepared in Example 1 is 523.6 cm$^{-1}$, and it can be seen that the negative electrode material has the residual compressive stress, and it can be seen that the negative electrode materials prepared in Comparative Example have the residual tensile stress. In addition, as a result of measuring the full width at half maximum (FWHM) of the silicon Raman signal prepared in Example 1, it was confirmed that the full width at half maximum (FWHM) was 12 cm$^{-1}$, and was larger than the full width at half maximum (FWHM) of the single crystal silicon Raman signal (C-Si (Ref.) in FIG. 3) .Analysis conditions: Excitation laser wavelength 532nm, laser power 0.5mW, spectrometer resolution 1cm$^{-1}$, powder negative electrode material 1g, detector exposure time 15s.The stress remaining in silicon was calculated using the Raman measurement results and the equation below, and the silicon residual stress in the particulate negative electrode material and the silicon residual stress in the bulk negative electrode material were summarized in Table 1. As summarized with the results of Comparative Examples in Table 1, in the case of the negative electrode material prepared in Example 1, it can be seen that silicon has a residual compressive stress of 0.74 GPa in the bulk form and a residual compressive stress of 0.29 GPa in the particle form, and in the case of Comparative Example 1, it can be seen that amorphous Si has tensile stress rather than compressive stress.$\sigma$ (MPa) = -500 $\times$ $\Delta\omega$ (cm$^{-1}$)

Here, $\sigma$ is residual stress, $\Delta\omega$ is the difference (=measured silicon Raman signal wave number - single crystal silicon Raman signal wave number) between the Raman signal of the measured sample compared to the single crystal silicon Raman signal (Si(ref) in FIG. 3, 520.4 cm$^{-1}$). In this case, when $\Delta\omega$ is a positive value, it means compressive stress, and when $\Delta\omega$ is a negative value, it means tensile stress. The two-dimensional mapping analysis based on the Raman signal of silicon was performed under the following conditions through the $\mu$-Raman analysis (Equipment name: XperRam C, Nanobase, Korea) of the bulk secondary battery negative electrode material (Example 1) obtained by the heat treatment or the magnesium-doped silicon oxide (Comparative Example 1) before the pulverization. The mapping results were illustrated in FIG. 4. In the case of the negative electrode material prepared in Example 1, the silicon Raman peaks were detected in all pixels, and as a result of measuring shift = WN$^{i}$(Si)-WN(ref) for each pixel, it was confirmed that the shift range was 2.86 (minimum value) to 4.58 (maximum value)Mapping conditions: excitation laser wavelength = 532 nm, laser power = 0.1 mW, detector exposure time (exposure time per unit analysis area) 1 sec, focal length = 30 mm, grating = 1800 grooves/mm, pixel resolution = 1 cm$^{-1}$, mapping size = 14$\mu$m $\times$ 14$\mu$m. Additionally, as a result of performing the shift analysis based on the Raman signal of silicon under the same conditions as described above at 20 different positions randomly selected from the negative electrode material having a size of 20 mm $\times$ 20 mm before the pulverization, it was confirmed that the range of shifts measured at different positions was 2.42 (minimum value) to 4.86 (maximum value). In addition, during the stress analysis of silicon nanoparticles at 20 different random positions, it was confirmed that the silicon nanoparticles have compressive stress in the range of 88 to 99%. (Experimental Example 4) Mechanical Properties. To measure the particle strength, the compressive strength was measured using a micro-compression tester MCT-W manufactured by Shimadzu Works. The particle strength was measured for 10 random particles with a diameter of 10 um, and the measurement results are summarized in Table 1.The micro-compression tester continuously applies force to the particles. In this case, the pressure at which the particles break is defined as the particle strength, which is automatically measured. Additionally, the test was performed using the nano-indentation test device (Anton Paar, Austria) on the cross sections of the magnesium-doped silicon oxide (Comparative Example 1) or the bulk secondary battery negative electrode material (Example 1) obtained by heat treatment before the pulverization. The nano-indentation test (indenter) followed the measurement standards of ISO 14577-1 E. The measurement conditions were conducted using a Berkovich indenter on the assumption that Poisson's ratio is 0.3, and performed at a maximum load of 50 mN and a load application speed of 100 mN/min. In this case, the separation distance between the indentation traces based on the indentation traces by the indenter was at least 10um or more, and it was performed in a matrix form of $5 \times 5$ to $25 \times 25$. The strength and elastic modulus calculated in this way were illustrated in FIG. 5.As illustrated in FIG. 5, it was confirmed that the average value of intensity according to the nano-indentation test of Example 1 is 4.41 GPa and the average value of elastic modulus is 43.1 GPa, whereas the average value of intensity and elastic modulus by the nano-indentation test of Comparative Example 1 were 2.76 GPa and 30.6 GPa, respectively. As a result of the nano-indentation test, Compared to Comparative Example 1, the strength of Example 1 was approximately 1.6 times higher, and the elastic modulus was 1.4 times higher, which showed that the mechanical properties of Example 1 were significantly improved.(Experimental Example 5) Battery Manufacturing and Battery Performance Evaluation Active material: conductive material (carbon black): carboxymethyl cellulose (CMC): styrene butadiene rubber (SBR) were mixed in a weight ratio of 8:1:0.5:0.5 using the final negative electrode material powder as the active material, and applied to copper foil having a thickness of 17 um and dried at 90°C for 40 minutes. After drying, it was punched to a diameter of 14 mm, metal lithium with a diameter of 16 mm was used as a counter electrode, and filled with electrolyte with a separator of 18 mm in diameter therebetween to manufacture a CR2032 coin-shaped half-cell. For the electrolyte, 1M $LiPF_6$ was dissolved in a solvent mixed with ethylene carbonate (EC)/diethyl carbonate (DEC) at a volume ratio of 1:1, and 3wt% of fluoroethylene carbonate (FEC) was used as an additive. The formation was performed by lithiating the manufactured battery to 0.005V at a constant current of 0.1C, lithiating the manufactured battery at a constant voltage of 0.005V until it reaches 0.01C, and then de-lithiating the manufactured battery to 1.5V at a constant current of 0.1C (first formation step), and then lithiating the manufactured battery to 0.005V at a constant current of 0.1C again, lithiating the manufactured battery at a constant voltage of 0.005V until it reaches 0.01C, and then de-lithiating the manufactured battery to 1.0V at a constant current of 0.1C (second formation step). Charge/discharge cycle conditions: Lithiation to 0.005V at a constant current of 0.5C, lithiation with a constant voltage of 0.005V until it reaches 0.05C, then de-lithiation to 1.0V at a constant current of 0.5CThe number of times of charge/discharge cycle: 50 times

The discharge capacity (C1) of the first cycle after the formation is summarized by capacity in Table 1. The initial efficiency based on the charge/discharge in the first chemical step and the capacity retention rate according to C50/C1*100 after the formation are also summarized in Table 1. The charge/discharge capacity and capacity retention rate according to the first formation step, the second formation step, and the charge/discharge cycle were illustrated in FIGS. 6(a) and 6(b), respectively. (Table 1)

|  | Example 1 | Comparativ e Example 1 | Comparativ e Example 2 | Comparativ e Examples |
|---|---|---|---|---|
| Average content (%) of doping element | 8.1 (Mg) | 8.3 (Mg) | 3.9 (Mg) |  |
| Standard deviation B | 2.01 | 2.08 | 2.68 |  |
| Bulk residual stress (GPa) | -0.74 | Amorphous | 0.43 | 0 |
| Powder residual stress (GPa) | -0.29 | Amorphous | 0.92 | 0 |
| Particle compressiv e strength (MPa) | 171 | 115 | 95 | 105 |
| Capacity (mAh/g) | 1407 | 1366 | 1378 | 2626 |
| Initial efficiency (%) | 80.4 | 61.4 | 77.0 | 84.7 |
| Capacity retention rate C50/C1 $\times$ 100 | 97.9 | 92.6 | 84.1 | 19.6 |

In addition, it was confirmed that the capacities of Example 2 and Example 3 were confirmed to be 1418 and 1465 mAh/g, respectively, and it was confirmed that both the capacity retention rates of Example 2 and Example 3 were 95% or more, and specifically 99.0% and 100.3%, respectively. FIGS. 7(a) and 7(b) are diagrams illustrating dQ/dV graphs in the first charge/discharge cycle in CC/CV, cut-off voltage 0.005V to 1.0V, charge/discharge cycle conditions of 0.1C-rate for Examples 1 to 3 and Comparative Examples 1 to 3, respectively. Referring to FIG. 7(a), it can be seen that in the case of Examples 1 to 3, there is not only the lithium insertion peak corresponding to the $Li_{3.5}Si$ reaction, but also the lithium insertion peak corresponding to the $Li_{3.75}Si$ reaction. As a result, it can be seen that when lithiating the negative electrode material manufactured according to Examples 1 to 3, the lithiation is performed at an alloying ratio of 3.75 mole lithium per 1 mole of silicon. On the other hand, as illustrated in FIG. 7(b), in Comparative Examples 1 and 2, only the lithium insertion peak corresponding to the $Li_{3.5}Si$ reaction was observed, and the lithium insertion peak corresponding to the $Li_{3.75}Si$ reaction was not observed. As such, the negative electrode material according to one embodiment of the present disclosure may have excellent capacity since the lithium insertion is performed beyond the $Li_{3.5}Si$ reaction to the $Li_{3.75}Si$ reaction when lithiating silicon. FIG. 8 is a diagram illustrating a high-resolution transmission electron microscope (HR-TEM) image of Example 1. From FIG. 8, it was confirmed that the average diameter of crystalline silicon nanoparticles was about 7.1 nm. As a result of selected area diffraction pattern (SADP) analysis, it was confirmed that the matrix contains crystalline magnesium silicate and that silicon nanoparticles form the coherent interface with crystalline magnesium silicate. Although not illustrated in the drawing, as a result of measuring the particle size distribution of the pulverized and carbon-coated negative electrode material powder, it was confirmed that the negative electrode material powder particles has an average (D50) particle size of 7.9 um. FIG. 9 is a scanning electron microscope photograph observing the cross section and thickness of the negative electrode active material layer containing the negative electrode material of Example 1 before lithiation and is a scanning electron microscope photograph observing the cross section and thickness of the negative electrode active material layer after 0.005V lithiation in the third charge/discharge cycle (first charge/discharge cycle of the life evaluation step). It was confirmed that the volume expansion rate was only about 15.5% due to the change in thickness before and after the lithiation. Although not illustrated in the drawing, as a result of checking the volume expansion rate due to the change in thickness of the negative electrode active material layer containing each negative electrode material before and after the lithiation, in the case of Example 2, the volume expansion rate was confirmed to be 13.4%, and in the case of Example 3, the volume expansion rate was confirmed to be 12.5%, whereas in the case of Comparative Example 1, Comparative Example 2, and Comparative Example 3, the volume expansion rates were confirmed to be 27.1%, 30.3%, and 271.2%, respectively. Hereinabove, although the present disclosure has been described by specific matters and defined embodiments and drawings, they have been provided only for assisting in the entire understanding of the present disclosure. Therefore, the present disclosure is not limited to the exemplary embodiments. Various modifications and changes may be made by those skilled in the art to which the present disclosure pertains from this description.

Therefore, the spirit of the present disclosure should not be limited to these exemplary embodiments, but the claims and all of modifications equal or equivalent to the claims are intended to fall within the scope and spirit of the present disclosure.

**Claims**

1. A negative electrode material for a secondary battery, comprising: a matrix containing silicon oxide, a composite oxide of silicon with at least one doping element selected from the group consisting of alkali metals, alkaline earth metals and post-transition metals, or a mixture thereof; and silicon nanoparticles dispersed and embedded in the matrix,

   wherein, during a charge-discharge test using a half-cell in which a counter electrode is a metal lithium foil, according to the following charge/discharge cycle conditions, the following Formula 1 is satisfied, and, in an X-ray diffraction pattern using CuKα rays, the ratio ($A_1/A_2$) of a first peak area ($A_1$) in which the diffraction angle $2\theta$ is located in the range of 10° to 27.4° and a second peak area ($A_2$) in which the diffraction angle $2\theta$ is located in the range of $28\pm0.5$° satisfies 0.8 to 6,

   Charge/discharge cycle conditions: constant current/constant voltage (CC/CV), cut-off voltage 0.005 V to 1.0 V, 0.5 charge/discharge rate (C-rate)

   $$(Formula\ 1)\ 95\ \%\ \leq\ C50/C1*100$$

   where C1 is the discharge capacity (mAh/g) at a first charge/discharge cycle, and C50 is the discharge capacity at a 50th charge/discharge cycle.

**2.** The negative electrode material for a secondary battery of claim 1, wherein in the X-ray diffraction pattern, a ratio ($L_1/L_2$) of a full width at half maximum (FWHM($L_1$)) of the first peak and a full width at half maximum (FWHM ($L_2$)) of the second peak is 6 to 15.

**3.** The negative electrode material for a secondary battery of claim 1, wherein an intensity ratio ($I_1/I_2$) between maximum intensity (I1) of the first peak and maximum intensity ($I_2$) of the second peak is 0.05 to 1.25.

**4.** The negative electrode material for a secondary battery of claim 1, wherein the first peak is derived from amorphous silicon oxide, and the second peak is derived from crystalline silicon.

**5.** The negative electrode material for a secondary battery of claim 1, wherein the C50 is 1150mAh/g or more.

**6.** The negative electrode material for a secondary battery of claim 1, wherein a full width at half maximum (FWHM) of a Raman peak of nanoparticulate silicon contained in the negative electrode material is larger than a full width at half maximum (FWHM) of a Raman peak of bulk single crystal silicon.

**7.** The negative electrode material for a secondary battery of claim 6, wherein the full width at half maximum (FWHM) of the Raman peak of the nanoparticulate silicon contained in the negative electrode material is 4 to 20 cm$^{-1}$.

**8.** The negative electrode material for a secondary battery of claim 6, wherein the following Formula 2 is satisfied based on a Raman signal of the silicon,

$$\text{(Formula 2)} \quad 1 < \text{WN(Si)/WN(ref)}$$

where WN(ref) denotes a central wave number of the Raman peak of the bulk single crystal silicon, and WN(Si) denotes a central wave number of the Raman peak of the nanoparticulate silicon contained in the negative electrode material.

**9.** The negative electrode material for a secondary battery of claim 8, wherein, during two-dimensional mapping analysis based on the Raman signal of the silicon, a difference between the maximum and minimum values of a shift defined by the following Formula 3 is 5 cm$^{-1}$ or less under the following mapping conditions, Mapping conditions: excitation laser wavelength = 532 nm, laser power = 0.1 mW, detector exposure time (exposure time per unit analysis area) 1 sec, focal length = 30 mm, grating = 1800 grooves/mm, pixel resolution = 1 cm$^{-1}$, mapping size = $14\mu\text{m} \times 14\mu\text{m}$.

$$\text{(Formula 3)}$$

$$\text{Shift} = \text{WN}^i\text{(Si)} - \text{WN(ref)}$$

where WN(ref) is the same as a regulation in Formula 2, and WN$^i$(Si) is the central wave number of the Raman peak of the nanoparticulate silicon contained in the negative electrode material in one pixel which is a unit analysis area during mapping analysis.

**10.** The negative electrode material for a secondary battery of claim 9, wherein during the deviation analysis based on the Raman signal of the silicon at 20 different random positions in a specimen of 20 mm $\times$ 20 mm, the difference between the maximum and minimum values of the deviation defined by the following Formula is 5 cm$^{-1}$ or less,

Mapping conditions: excitation laser wavelength = 532 nm, laser power = 0.1 mW, detector exposure time (exposure time per unit analysis area) 1 sec, focal length = 30 mm, grating = 1800 grooves/mm, pixel resolution = 1 cm$^{-1}$

$$\text{(Formula 3)}$$

$$\text{Shift} = \text{WN}^i\text{(Si)} - \text{WN(ref)}$$

where WN(ref) is the same as the regulation in Formula 2, and WN$^i$(Si) is the central wave number of the Raman peak of the nanoparticulate silicon contained in the negative electrode material in one pixel which is a unit analysis area during the mapping analysis.

11. The negative electrode material for a secondary battery of claim 1, wherein, during stress analysis of the silicon nanoparticle at 20 different random positions in A20 mm × 20 mm specimen, a compressive stress is 80% or more.

12. The negative electrode material for a secondary battery of claim 1, wherein the negative electrode material contains a plurality of negative electrode material particles and has inter-particle composition uniformity according to the following Formula 3,

$$(Formula\ 4)$$

$$1.3 \leq UF(D)$$

where UF(D) is a value obtained by dividing an average doping element composition between negative electrode material particles divided by a standard deviation of a doping element composition, based on weight percent composition.

13. The negative electrode material for a secondary battery of claim 1, wherein an average diameter of the silicon nanoparticles is 2 to 30 nm.

14. The negative electrode material for a secondary battery of claim 1, wherein an interface between the silicon nanoparticles and the matrix is a coherent interface.

15. The negative electrode material for a secondary battery of claim 1, wherein the doping element is one or more selected from the group consisting of lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi).

16. The negative electrode material for a secondary battery of claim 1, wherein the negative electrode material is a particle phase having an average diameter of an order of $10^0$ um to $10^1$ um.

17. The negative electrode material for a secondary battery of claim 1, further comprising a coating layer containing carbon.

18. A secondary battery comprising the negative electrode material for a secondary battery according to any one of claims 1 to 17.

FIG. 1

FIG. 2

FIG. 3

FIG. 4

FIG. 5

FIG. 6A

FIG. 6B

FIG. 7A

FIG. 7B

FIG. 8

FIG. 9

## INTERNATIONAL SEARCH REPORT

| | |
|---|---|
| International application No. |
| **PCT/KR2022/018209** |

**A.    CLASSIFICATION OF SUBJECT MATTER**

**H01M 4/36**(2006.01)i; **H01M 4/38**(2006.01)i; **H01M 4/48**(2010.01)i; **H01M 4/62**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/36(2006.01); C01B 32/05(2017.01); H01M 10/052(2010.01); H01M 10/0525(2010.01); H01M 4/13(2010.01); H01M 4/134(2010.01); H01M 4/48(2010.01); H01M 4/485(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary Battery), 음극재(negative electrode material), 매트릭스 (matrix), 실리콘 산화물(silicon oxide), 실리콘의 복합산화물(a complex oxide of silicon), 실리콘 나노입자(silicon nanoparticle), 충방전 사이클(charge/discharge cycle), X선 회절 패턴(X-rays diffraction pattern), 비정질 실리콘 산화물 (amorphous silicon oxide), 결정질 실리콘(crystalline silicon), 잔류 응력(residual stress)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2019-0065148 A (LG CHEM, LTD.) 11 June 2019 (2019-06-11)<br>See paragraphs [0003], [0024], [0025], [0027]-[0035], [0068], [0095], [0118] and [0119]; and figure 1. | 1-3,5-18 |
| A | | 4 |
| A | KR 10-1586816 B1 (DAE JOO ELECTRONIC MATERIALS CO., LTD.) 20 January 2016 (2016-01-20)<br>See claims 1-14. | 1-18 |
| A | KR 10-2020-0126344 A (DAE JOO ELECTRONIC MATERIALS CO., LTD.) 06 November 2020 (2020-11-06)<br>See claims 1-20. | 1-18 |
| A | KR 10-2020-0065514 A (HYUNDAI MOTOR COMPANY et al.) 09 June 2020 (2020-06-09)<br>See claims 1-9. | 1-18 |

☑ Further documents are listed in the continuation of Box C.         ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 February 2023** | **22 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/018209**

**C.    DOCUMENTS CONSIDERED TO BE RELEVANT**

| Category* | Citation of document, with indication, where appropriate, of the relevant passages | Relevant to claim No. |
|---|---|---|
| PX | KR 10-2405768 B1 (TERA TECHNOS CO., LTD.) 08 June 2022 (2022-06-08)<br>See claims 1-3 and 5-18.<br>`This document is a published earlier application that serves as a basis for claiming priority of the present international application.' | 1-18 |

Form PCT/ISA/210 (second sheet) (July 2022)

## INTERNATIONAL SEARCH REPORT
### Information on patent family members

International application No.

**PCT/KR2022/018209**

| Patent document cited in search report | | | Publication date (day/month/year) | Patent family member(s) | | | Publication date (day/month/year) |
|---|---|---|---|---|---|---|---|
| KR | 10-2019-0065148 | A | 11 June 2019 | CN | 110915033 | A | 24 March 2020 |
| | | | | CN | 110915033 | B | 07 June 2022 |
| | | | | EP | 3675249 | A1 | 01 July 2020 |
| | | | | KR | 10-2312408 | B1 | 13 October 2021 |
| | | | | US | 2020-0235383 | A1 | 23 July 2020 |
| | | | | WO | 2019-107990 | A1 | 06 June 2019 |
| KR | 10-1586816 | B1 | 20 January 2016 | CN | 106537659 | A | 22 March 2017 |
| | | | | CN | 106537659 | B | 24 September 2021 |
| | | | | CN | 113937258 | A | 14 January 2022 |
| | | | | EP | 3136477 | A1 | 01 March 2017 |
| | | | | JP | 2018-519648 | A | 19 July 2018 |
| | | | | JP | 6775577 | B2 | 28 October 2020 |
| | | | | US | 10593933 | B2 | 17 March 2020 |
| | | | | US | 2018-0090750 | A1 | 29 March 2018 |
| | | | | WO | 2016-204366 | A1 | 22 December 2016 |
| KR | 10-2020-0126344 | A | 06 November 2020 | CN | 114041215 | A | 11 February 2022 |
| | | | | EP | 3965187 | A1 | 09 March 2022 |
| | | | | JP | 2022-530780 | A | 01 July 2022 |
| | | | | KR | 10-2466133 | B1 | 14 November 2022 |
| | | | | US | 2022-0209228 | A1 | 30 June 2022 |
| | | | | WO | 2020-222628 | A1 | 05 November 2020 |
| KR | 10-2020-0065514 | A | 09 June 2020 | CN | 111261852 | A | 09 June 2020 |
| | | | | DE | 102019126190 | A1 | 04 June 2020 |
| | | | | US | 11031588 | B2 | 08 June 2021 |
| | | | | US | 2020-0176758 | A1 | 04 June 2020 |
| KR | 10-2405768 | B1 | 08 June 2022 | None | | | |

Form PCT/ISA/210 (patent family annex) (July 2022)

EP 4 451 374 A1

## REFERENCES CITED IN THE DESCRIPTION

### Patent documents cited in the description

- KR 1020200065514
- KR 1020150045336